(19) **Europäisches Patentamt European Patent Office Office européen des brevets**

(11) **EP 4 787 594 A1**

(12) **EUROPEAN PATENT APPLICATION**
published in accordance with Art. 153(4) EPC

(43) Date of publication:
05.08.2026 Bulletin 2026/32

(51) International Patent Classification (IPC):
H01M 50/457 (2021.01)   H01M 50/434 (2021.01)
H01M 10/0525 (2010.01)   H01M 10/0587 (2010.01)

(21) Application number: 23953724.4

(22) Date of filing: 28.09.2023

(52) Cooperative Patent Classification (CPC):
H01M 10/0525; H01M 10/0587; H01M 50/434;
H01M 50/457; Y02E 60/10

(86) International application number:
PCT/CN2023/122770

(87) International publication number:
WO 2025/065577 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Ningde Amperex Technology Limited
Ningde, Fujian 352100 (CN)

(72) Inventor: HE, Jun
Ningde, Fujian 352100 (CN)

(74) Representative: Dehns Germany Partnerschaft
mbB
Theresienstraße 6-8
80333 München (DE)

(54) **FAST-CHARGING SECONDARY BATTERY AND ELECTRICAL APPARATUS**

(57) A fast-charging secondary battery and an electrical apparatus. The fast-charging secondary battery includes an electrode assembly and an electrolyte solution. The electrode assembly includes a positive electrode plate, a negative electrode plate, and a separator disposed between the positive electrode plate and the negative electrode plate. The positive electrode plate includes a positive electrode current collector, the positive electrode current collector integrally extending to form a plurality of positive electrode tabs. The negative electrode plate includes a negative electrode current collector, the negative electrode current collector integrally extending to form a plurality of negative electrode tabs. The separator includes a separator substrate, a first adhesive coating layer, and a second adhesive coating layer, where the first adhesive coating layer and the second adhesive coating layer are respectively disposed on two sides of the separator substrate. The first adhesive coating layer contains a first polymer binder, an average particle size of the first polymer binder being in a range of 0.3 μm to 3 μm. The second adhesive coating layer contains a second polymer binder, an average particle size of the second polymer binder being in a range of 4 μm to 15 μm. The fast-charging secondary battery can balance kinetic performance, cycling performance, and mechanical reliability.

FIG. 1

**Description**

**TECHNICAL FIELD**

This application relates to the field of electrochemical technology, and in particular, to a fast-charging secondary battery and an electrical apparatus.

**BACKGROUND**

Secondary batteries (such as lithium-ion batteries) are widely used in various fields such as electrical energy storage, portable electronic devices, and electric vehicles due to their high specific energy, high operating voltage, low self-discharge rate, small size, and light weight. With the continuous iterative development of consumer lithium-ion batteries in recent years, the market demand for their charging speed has become increasingly high. The charging rate of lithium-ion batteries has been continuously increasing, with the consumer demand gradually rising from 1C to over 5C. However, it is difficult to balance the kinetic performance, cycling performance, and mechanical reliability of fast-charging (5C ≤ charging rate ≤ 15C) lithium-ion batteries. Therefore, how to balance the kinetic performance, cycling performance, and mechanical reliability of super-fast-charging lithium-ion batteries has become a technical problem that urgently needs to be solved by those skilled in the art.

**SUMMARY**

The purpose of this application is to provide a fast-charging secondary battery to balance the kinetic performance, cycling performance, and mechanical reliability of the fast-charging secondary battery. This application also provides an electrical apparatus using such fast-charging secondary battery.

It should be noted that in the summary of this application, a lithium-ion battery is used as an example of a secondary battery to explain this application, but the secondary battery of this application is not limited to lithium-ion batteries. This application can also be applied to other secondary batteries such as sodium-ion batteries.

The specific technical solution is as follows:

A first aspect of this application provides a fast-charging secondary battery, where the fast-charging secondary battery includes an electrode assembly and an electrolyte solution, where the electrode assembly includes a positive electrode plate, a negative electrode plate, and a separator disposed between the positive electrode plate and the negative electrode plate; the positive electrode plate includes a positive electrode current collector, the positive electrode current collector integrally extending to form a plurality of positive electrode tabs; the negative electrode plate includes a negative electrode current collector, the negative electrode current collector integrally extending to form a plurality of negative electrode tabs; and the separator includes a separator substrate, a first adhesive coating layer, and a second adhesive coating layer, where the first adhesive coating layer and the second adhesive coating layer are respectively disposed on two sides of the separator substrate; the first adhesive coating layer contains a first polymer binder, an average particle size of the first polymer binder being in a range of 0.3 μm to 3 μm; and the second adhesive coating layer contains a second polymer binder, an average particle size of the second polymer binder being in a range of 4 μm to 15 μm.

In this application, by arranging the positive electrode current collector to integrally extend to form a plurality of positive electrode tabs and the negative electrode current collector to integrally extend to form a plurality of negative electrode tabs, the secondary battery has a multi-tab structure, with a plurality of current channels on the positive electrode plate and the negative electrode plate, thereby reducing the internal resistance of the secondary battery. This enables the secondary battery to have small voltage polarization under high-rate charging conditions, reducing the charging temperature rise of the secondary battery, and shortening the charging time of the secondary battery, thereby enabling the secondary battery to have relatively high kinetic performance. To adapt to the kinetic requirements of the fast-charging secondary battery, a large amount of electrolyte solution is added to the secondary battery, meaning a high electrolyte solution retention (free electrolyte solution exists in the fresh secondary battery), which requires high wettability and fluidity of the electrolyte solution. The connection strength between the plurality of electrode tabs integrally extending from the current collector and the current collector is far lower than the connection method in the prior art where external electrode tabs are welded to the current collector. Moreover, the electrode tabs integrally extending with the current collector are typically obtained by die-cutting, and defects such as burrs and micro-cracks easily occur at the edges of the electrode tabs during die-cutting, further reducing the strength of the integrally extending electrode tabs. The aforementioned reasons lead to the low strength and easy fracture of the multi-tab structure integrally extending from the current collector. The high electrolyte solution retention design of the fast-charging secondary battery causes free electrolyte solution to move under external forces such as drops and vibrations, impacting the multi-tab structure of the fast-charging secondary battery, increasing the risk of electrode tab fracture, and further increasing the internal resistance of the fast-charging secondary battery or affecting the mechanical reliability of the fast-charging secondary battery. When the first adhesive coating layer and the second adhesive coating layer are respectively disposed on two sides of the separator of the fast-charging secondary battery, and the average particle size of the first polymer binder in the first adhesive coating layer and the average particle size of the second polymer binder in the second adhesive coating layer are within the above-mentioned ranges of this application, one side of the separator has high adhesion, which can strengthen the adhesion between the separator and the positive/negative electrode plates, and improve the hardness of the fast-charging secondary battery, thereby improving the mechanical reliability of the fast-charging secondary battery. Additionally, the high adhesion of the separator can also reduce the relative movement of the electrode plates caused by external mechanical forces, alleviate the impacts, and reduce the fracture rate of the positive/negative electrode tabs, thereby further improving the mechanical reliability of the fast-charging secondary battery and reducing the internal resistance of the fast-charging secondary battery. Furthermore, the other side of the separator has the second adhesive coating layer, which increases the gap with the negative/positive electrode plates, and expands the electrolyte solution transmission channel. In this way, the space for storing electrolyte solution increases, and the fast-charging secondary battery can have a high electrolyte solution retention (such as 1.5 g/Ah to 2.4 g/Ah), ensuring sufficient electrolyte solution at the head, tail, and middle part of the fast-charging secondary battery during the cycling process. This provides sufficient ion channels to meet the cycling requirements of the fast-charging secondary battery, thereby enabling the fast-charging secondary battery to have good cycling performance. Thus, in this application, the separator and the multi-tab structure have a good synergistic effect, which can balance the kinetic performance, cycling performance, and mechanical reliability of the fast-charging secondary battery.

In an embodiment of this application, $N_1$ layers of the positive electrode plate are disposed between two adjacent positive electrode tabs, and $N_2$ layers of the negative electrode plate are disposed between two adjacent negative electrode tabs, where $N_1$ and $N_2$ are each independently selected from 0, 1, 2, or 3. By controlling $N_1$ and $N_2$ within the above ranges, the fast-charging secondary battery can have a sufficient number of positive electrode tabs and negative electrode tabs on the positive electrode plate and the negative electrode plate, thereby providing a plurality of current channels on the positive electrode plate and the negative electrode plate. This can reduce the internal resistance of the secondary battery, and reduce the charging temperature rise and shorten the charging time of the fast-charging secondary battery, thereby enabling the fast-charging secondary battery to have good kinetic performance while balancing cycling performance and mechanical reliability. It can be understood that controlling $N_1$ and $N_2$ to 0 allows for more current channels on the positive electrode plate and the negative electrode plate, further reducing the internal resistance of the secondary battery. This can further reduce the charging temperature rise and further shorten the charging time of the fast-charging secondary battery, thereby further improving the kinetic performance of the fast-charging secondary battery while balancing its cycling performance and mechanical reliability. However, this reduces the energy density of the secondary battery to some extent. Adjusting $N_1$ and $N_2$ to 1, 2, or 3 can reduce the number of electrode tabs and increase the internal resistance to some extent, but can improve the energy density of the battery.

In an embodiment of this application, the first adhesive coating layer is disposed on a side of the separator substrate closer to the negative electrode plate, and the second adhesive coating layer is disposed on a side of the separator substrate closer to the positive electrode plate. Most secondary batteries primarily require fast charging for energy replenishment, but have no demand for fast discharging, meaning that the charging rate is much greater than the discharging rate. The charging process of a secondary battery mainly involves the intercalation of lithium ions into the negative electrode, so arranging the highly adhesive coating layer with small separator particles on the negative electrode plate side can shorten the lithium ion transmission path during the charging process, achieving a faster charging speed.

In an embodiment of this application, the average particle size of the first polymer binder is in a range of 0.6 μm to 1.6 μm; and/or the average particle size of the second polymer binder is in a range of 8 μm to 12 μm. Controlling the average particle size of the first polymer binder within the above range further improves the kinetic performance and mechanical reliability of the fast-charging secondary battery and achieves a high energy density while ensuring the cycling performance of the fast-charging secondary battery. Controlling the average particle size of the second polymer binder within the above range further improves the cycling performance and kinetic performance of the fast-charging secondary battery and achieves a high energy density for the fast-charging secondary battery while ensuring the mechanical reliability of the fast-charging secondary battery.

In an embodiment of this application, a thickness of the first adhesive coating layer is in a range of 0.2 μm to 4 μm, and a thickness of the second adhesive coating layer is in a range of 5 μm to 20 μm. The highly adhesive coating layer has a smaller particle size and strong adhesion. Ensuring its thickness is between 0.2 μm and 4 μm can maximize energy density while ensuring adhesion, and also shorten the transmission path of lithium ions in the active material layer corresponding to the first adhesive coating layer. The second adhesive coating layer has a larger particle size and can form channels for electrolyte solution flow. Setting its thickness between 5 μm and 20 μm can increase energy density while ensuring good electrolyte solution fluidity and wettability.

In an embodiment of this application, a single-sided coating weight of the first adhesive coating layer is in a range of 0.0001 mg/mm$^2$ to 0.001 mg/mm$^2$, and a single-sided coating weight of the second adhesive coating layer is in a range of 0.0004 mg/mm$^2$ to 0.002 mg/mm$^2$. Controlling the single-sided coating weight of the first adhesive coating layer within the above range can fully utilize the high adhesion characteristics of the first adhesive coating layer to better bond the electrode plate and the separator, ensuring the mechanical reliability of the secondary battery. Controlling the single-sided coating weight of the second adhesive coating layer within the above range can fully realize the electrolyte solution flow channel between the electrode plate and the separator, improving the kinetic and cycling performance of the secondary battery.

In an embodiment of this application, a coverage rate of the first polymer binder in the first adhesive coating layer per unit area is in a range of 40% to 60%. Controlling the coverage rate of the first polymer binder in the first adhesive coating layer per unit area within the above range can fully utilize the high adhesion characteristics of the first adhesive coating layer. This allows lithium ions to have a faster transmission speed while facilitating the adhesion between the separator and the electrode plate, enabling the secondary battery to have good kinetic performance.

In an embodiment of this application, the first polymer binder has a core-shell structure, and the first polymer binder includes a first shell and a first core, where a polymerization monomer of the first shell includes one or more selected from the group consisting of methyl acrylate, ethyl acrylate, butyl acrylate, methyl methacrylate, ethyl methacrylate, butyl methacrylate, ethylene, chloroethyl methacrylate, chlorostyrene, fluorostyrene, methylstyrene, acrylonitrile, and methacrylonitrile, and a polymerization monomer of the first core includes one or more selected from the group consisting of ethyl acrylate, butyl acrylate, ethyl methacrylate, styrene, chlorostyrene, fluorostyrene, methylstyrene, acrylic acid, methacrylic acid, and maleic acid; or the first polymer binder has a non-core-shell structure, and a polymerization monomers of the first polymer binder includes one or more selected from the group consisting of acrylic acid, methyl acrylate, butyl acrylate, butadiene, styrene, acrylonitrile, ethylene, fluorostyrene, chlorostyrene, and propylene. The above types of first polymer binders, when applied in the first adhesive coating layer, enable the first adhesive coating layer to have high adhesion.

In an embodiment of this application, a coverage rate of the second polymer binder in the second adhesive coating layer per unit area is in a range of 40% to 60%. By controlling the coverage rate of the second polymer binder in the second adhesive coating layer per unit area within the above range, the secondary battery has a high energy density while ensuring strong adhesion between the separator and the electrode plate. This ensures low production costs and high energy density for the fast-charging secondary battery while balancing the kinetic performance, cycling performance, and mechanical reliability.

In an embodiment of this application, the second polymer binder has a core-shell structure, and the second polymer binder includes a second shell and a second core, where a polymerization monomer of the second shell includes one or more selected from the group consisting of vinylidene chloride, vinylidene fluoride, hexafluoropropylene, styrene, butadiene, acrylonitrile, acrylic acid, methyl acrylate, and butyl acrylate, and a polymerization monomer of the second core includes one or more selected from the group consisting of ethyl methacrylate, methyl acrylate, ethyl acrylate, butyl acrylate, methyl methacrylate, butyl methacrylate, and chloroethyl methacrylate; or the second polymer binder has a non-core-shell structure, and a polymerization monomer of the second polymer binder includes one or more selected from the group consisting vinylidene chloride, vinylidene fluoride, hexafluoropropylene, ethylene, propylene, vinyl chloride, chloropropylene, acrylic acid, methyl acrylate, butyl acrylate, styrene, butadiene, and acrylonitrile. The use of the above types of second polymer binders can create a large gap between the second adhesive coating layer and the positive/-negative electrode plates.

In an embodiment of this application, the separator further includes a ceramic coating layer, where the ceramic coating layer is disposed between the separator substrate and the first adhesive coating layer, and/or the ceramic coating layer is disposed between the separator substrate and the second adhesive coating layer; and the ceramic coating layer includes ceramic particles, an average particle size of the ceramic particles being in a range of 1 $\mu$m to 3 $\mu$m. The ceramic coating layer has good hardness and heat resistance. By arranging a ceramic coating layer in the separator and controlling the average particle size of the ceramic particles in the ceramic coating layer within the above range, the fast-charging secondary battery can have further improved mechanical reliability while maintaining good thermal safety performance. Additionally, the fast-charging secondary battery has good kinetic performance and cycling performance.

In an embodiment of this application, the ceramic particles include at least one of aluminum oxide, boehmite, titanium dioxide, silicon dioxide, zirconium dioxide, tin dioxide, magnesium hydroxide, magnesium oxide, zinc oxide, barium sulfate, boron nitride, aluminum nitride, or silicon nitride.

In an embodiment of this application, a thickness of the ceramic coating layer is in a range of 0.5 $\mu$m to 6 $\mu$m. Controlling the thickness of the ceramic coating layer within the above range enables the fast-charging secondary battery to have good thermal safety performance and energy density while balancing the kinetic performance, cycling performance, and mechanical reliability.

A second aspect of this application provides an electrical apparatus including the fast-charging secondary battery according to any one of the foregoing embodiments. Therefore, the electrical apparatus has good usage performance.

Beneficial effects of this application:

This application provides a fast-charging secondary battery and an electrical apparatus. Based on the high liquid retention design of the fast-charging secondary battery, a multi-tab structure is arranged, a first adhesive coating layer and a second adhesive coating layer are respectively disposed on two sides of the separator substrate, and the particle size ranges for the first polymer binder in the first adhesive coating layer and the second polymer binder in the second adhesive coating layer are defined, so that a good synergistic effect is achieved between the multi-tab structure and the separator while maintaining high liquid retention of the fast-charging secondary battery. This, on the basis of realizing fast charging performance of the secondary battery, improves the mechanical reliability of the secondary battery, that is, balancing the kinetic performance, cycling performance, and mechanical reliability of the fast-charging secondary battery. The electrical apparatus of this application has good usage performance.

## BRIEF DESCRIPTION OF DRAWINGS

The accompanying drawings described herein are intended for better understanding of this application and constitute a part of this application. Illustrative embodiments and descriptions thereof in this application are intended to interpret this application without constituting any inappropriate limitation on this application.

FIG. 1 is a schematic structural diagram of an electrode assembly according to an embodiment of this application;
FIG. 2 is a schematic structural diagram of an electrode assembly according to another embodiment of this application;
FIG. 3 is a schematic structural diagram of a positive electrode plate according to an embodiment of this application;
FIG. 4 is a schematic structural diagram of a negative electrode plate according to an embodiment of this application;
FIG. 5 is a schematic diagram of a positional relationship between a separator and a positive electrode plate and a negative electrode plate according to an embodiment of this application;
FIG. 6 is a schematic diagram of a positional relationship between a separator and a positive electrode plate and a negative electrode plate according to another embodiment of this application;
FIG. 7 is a schematic cross-sectional view of a separator along its thickness direction according to an embodiment of this application;
FIG. 8 is a schematic cross-sectional view of a separator along its thickness direction according to another embodiment of this application; and
FIG. 9 is a schematic cross-sectional view of a separator along its thickness direction according to still another embodiment of this application.

## DETAILED DESCRIPTION

To make the objectives, technical solutions, and advantages of this application more comprehensible, the following describes this application in detail with reference to embodiments and accompanying drawings. Apparently, the described embodiments are only some rather than all of the embodiments of this application. All other embodiments obtained by persons of ordinary skill in the art based on this application shall fall within the protection scope of this application.

Fast-charging secondary batteries require very low impedance of the battery system to meet the requirements for high-rate ($5C \leq$ charging rate $\leq 15C$) charging and the cycling performance of fast-charging secondary batteries. The embedded single-tab structure used in existing secondary batteries leads to crowded current channels in the positive electrode plate or negative electrode plate, increasing the ohmic impedance of the secondary batteries. When the secondary batteries are charged at a high rate, the charging temperature rise is high, the charging speed is low, and the kinetic performance is poor. Furthermore, existing secondary batteries have low electrode retention. As the cycling process proceeds, the electrolyte solution is gradually consumed, and the number of ion channels gradually decreases. When the number of ion channels decreases to a level that cannot meet the transmission requirements during the cycling process of the secondary batteries, local intercalation and deintercalation failures begin to occur in the positive and negative electrode plates, and the failure area expands as the cycling continues, leading to rapid decay and eventual failure of cycling of the secondary battery. In view of this, this application provides a fast-charging secondary battery and an electrical apparatus.

A first aspect of this application provides a fast-charging secondary battery, where the fast-charging secondary battery includes an electrode assembly and an electrolyte solution, where the electrode assembly includes a positive electrode plate, a negative electrode plate, and a separator disposed between the positive electrode plate and the negative electrode plate; the positive electrode plate includes a positive electrode current collector, the positive electrode current collector integrally extending to form a plurality of positive electrode tabs; and the negative electrode plate includes a negative electrode current collector, the negative electrode current collector integrally extending to form a plurality of negative electrode tabs; and the separator includes a separator substrate, a first adhesive coating layer, and a second adhesive coating layer, where the first adhesive coating layer and the second adhesive coating layer are respectively disposed on two sides of the separator substrate. The first adhesive coating layer contains a first polymer binder, an average particle size of the first polymer binder being in a range of 0.3 $\mu$m to 3 $\mu$m. The second adhesive coating layer contains a second polymer binder, an average particle size of the second polymer binder being in a range of 4 $\mu$m to 15 $\mu$m.

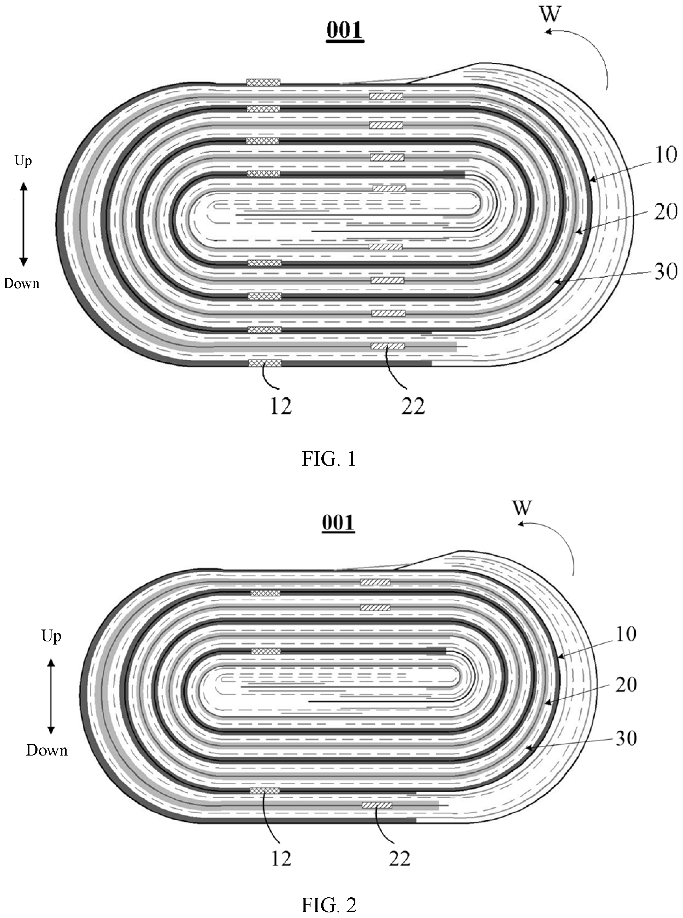

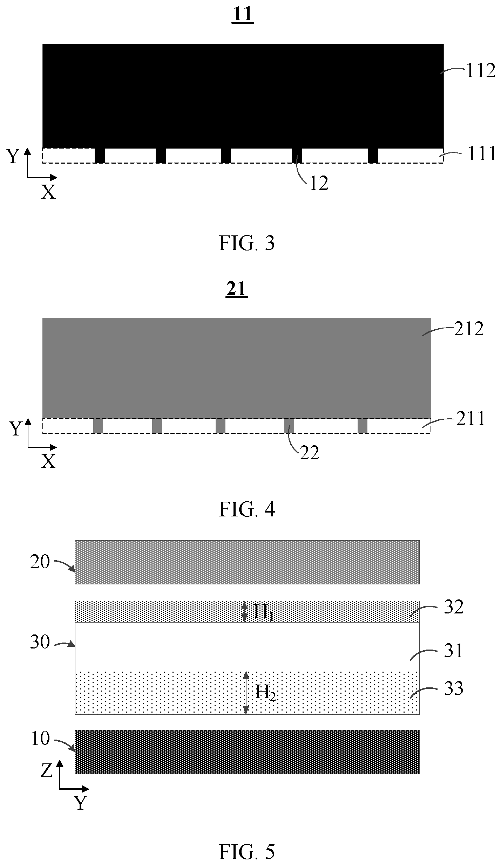

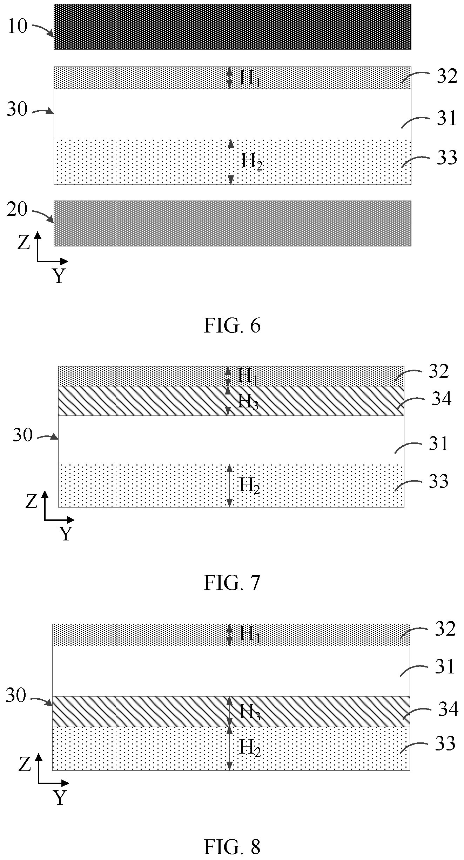

In this application, for ease of understanding, a length direction of the separator in an unfolded state is defined as X, its width direction as Y, and its thickness direction as Z. It can be understood that the length direction, width direction, and thickness direction of the positive electrode plate and the negative electrode plate in an unfolded state are the same as those of the separator. After the positive electrode plate, the separator, and the negative electrode plate are wound to form a wound electrode assembly, a winding direction of the electrode assembly is W. As shown in FIG. 1 and FIG. 2, the electrode assembly 001 includes a positive electrode plate 10, a negative electrode plate 20, and a separator 30, the separator 30 being disposed between the positive electrode plate 10 and the negative electrode plate 20. As shown in FIG. 3, the positive electrode plate 10 includes a positive electrode current collector 11, the positive electrode current collector 11 integrally extending to form a plurality of positive electrode tabs 12, where the positive electrode current collector 11 includes a positive electrode tab region 111 and a positive electrode body region 112. It can be understood that the positive electrode tab region 111 is a region where the positive electrode tabs 12 are disposed, and the positive electrode body region 112 refers to a region of the positive electrode current collector 11 other than the positive electrode tab region 111. As shown in FIG. 4, the negative electrode plate 20 includes a negative electrode current collector 21, the negative electrode current collector 21 integrally extending to form a plurality of negative electrode tabs 22, where the negative electrode current collector 21 includes a negative electrode tab region 211 and a negative electrode body region 212. It can be understood that the negative electrode tab region 211 is a region where the negative electrode tabs 22 are disposed, and the negative electrode body region 212 refers to a region of the negative electrode current collector 21 other than the negative electrode tab region 211. In this application, the "integrally extending" means that the current collector and the electrode tabs are integrally formed, for example, a plurality of electrode tabs are created on the current collector by die-cutting or laser, which is different from the scheme of connecting electrode tabs to the current collector by means such as welding. It should be noted that the numbers, shapes, and sizes of the positive electrode tabs and negative electrode tabs in FIG. 1 to FIG. 4 are for illustrative purposes only, and this application is not limited thereto. As shown in FIG. 5 and FIG. 6, the separator 30 includes a separator substrate 31, a first adhesive coating layer 32, and a second adhesive coating layer 33, where the first adhesive coating layer 32 and the second adhesive coating layer 33 are respectively disposed on two sides of the separator substrate 31, and the separator substrate 31 is located between the first adhesive coating layer 32 and the second adhesive coating layer 33. The first adhesive coating layer 32 may be closer to the side of the positive electrode plate 10, or closer to the side of the negative electrode plate 20. As shown in FIG. 5, the first adhesive coating layer 32 is disposed on a side of the separator substrate 31 closer to the negative electrode plate 20, and the second adhesive coating layer 33 is disposed on a side of the separator substrate 31 closer to the positive electrode plate 10. As shown in FIG. 6, the first adhesive coating layer 32 is disposed on a side of the separator substrate 31 closer to the positive electrode plate 10, and the second adhesive coating layer 33 is disposed on a side of the separator substrate 31 closer to the negative electrode plate 20. In this application, the "plurality of" refers to two or more. In an embodiment of this application, a plurality refers to 2 to a quantity the same as the number of electrode plate layers. For example, a plurality may be 2, 3, 4, 5, 6, 7, 10, 15, 20, 25, or 30.

For example, the average particle size of the first polymer binder is 0.3 $\mu$m, 0.5 $\mu$m, 1 $\mu$m, 1.5 $\mu$m, 2 $\mu$m, 2.5 $\mu$m, 3 $\mu$m, or any value in a range defined by any two of the above values. If the average particle size of the first polymer binder is less than 0.3 $\mu$m, the average particle size of the first polymer binder is too small, and the particles of the first polymer binder are prone to agglomerate during the preparation of the first adhesive coating layer slurry. In this way, the probability of the first polymer binder being uniformly dispersed in the first adhesive coating layer slurry is extremely small, and the first polymer binder in the formed first adhesive coating layer is unevenly distributed, which affects the adhesion of the first adhesive coating layer. If the average particle size of the first polymer binder is greater than 3 $\mu$m, the average particle size of the first polymer binder is too large, and the gap between the particles of the first polymer binder is too large, which affects the exertion of the adhesion of the first polymer binder in the first adhesive coating layer, and in turn affects the adhesion of the first adhesive coating layer. Furthermore, if the average particle size of the first polymer binder is too large, the thickness of the first adhesive coating layer is increased, increasing the volume of the fast-charging secondary battery and consequently leading to a loss in its energy density.

For example, the average particle size of the second polymer binder is 4 $\mu$m, 6 $\mu$m, 8 $\mu$m, 10 $\mu$m, 12 $\mu$m, 14 $\mu$m, 15 $\mu$m, or any value in a range defined by any two of the above values. If the average particle size of the second polymer binder is less than 4 $\mu$m, the average particle size of the second polymer binder is too small, the gap between the separator and the positive electrode plate or the negative electrode plate is too small, and the electrolyte solution transmission channel is too narrow, which affects the transmission of the electrolyte solution, thereby affecting the cycling performance and kinetic performance of the fast-charging secondary battery. If the average particle size of the second polymer binder is greater than 15 $\mu$m, the average particle size of the second polymer binder is too large, which increases the thickness of the second adhesive coating layer, thereby increasing the volume of the fast-charging secondary battery and consequently leading to a loss in its energy density.

In this application, by arranging the positive electrode current collector to integrally extend to form a plurality of positive electrode tabs and the negative electrode current collector to integrally extend to form a plurality of negative electrode tabs, the secondary battery has a multi-tab structure, with a plurality of current channels on the positive electrode plate and the negative electrode plate, thereby reducing the internal resistance of the secondary battery. This enables the fast-charging secondary battery to have small voltage polarization under high-rate charging conditions, reducing the charging temperature rise of the secondary battery, and shortening the charging time of the secondary battery, thereby enabling the secondary battery to have relatively high kinetic performance. To adapt to the kinetic requirements of the fast-charging secondary battery, a large amount of electrolyte solution is added to the secondary battery, meaning a high electrolyte solution retention (free electrolyte solution exists in the fresh secondary battery), which requires high wettability and fluidity of the electrolyte solution. The connection strength between the plurality of electrode tabs integrally extending from the current collector and the current collector is far lower than the connection method in the prior art where external electrode tabs are welded to the current collector. Moreover, the electrode tabs integrally extending with the current collector are typically obtained by die-cutting, and defects such as burrs and micro-cracks easily occur at the edges of the electrode tabs during die-cutting, further reducing the strength of the integrally extending electrode tabs. The aforementioned reasons lead to the low strength and easy fracture of the multi-tab structure integrally extending from the current collector. The high electrolyte solution retention design of the fast-charging secondary battery causes free electrolyte solution to move under external forces such as drops and vibrations, impacting the multi-tab structure of the fast-charging secondary battery, increasing the risk of electrode tab fracture, and further increasing the internal resistance of the fast-charging secondary battery or affecting the mechanical reliability of the fast-charging secondary battery. When the first adhesive coating layer and the second adhesive coating layer are respectively disposed on two sides of the separator of the fast-charging secondary battery, and the average particle size of the first polymer binder in the first adhesive coating layer and the average particle size of the second polymer binder in the second adhesive coating layer are within the above-mentioned ranges of this application, one side of the separator has high adhesion, which can strengthen the adhesion between the separator and the electrode plate, and improve the hardness of the fast-charging secondary battery, thereby improving the mechanical reliability of the fast-charging secondary battery. Additionally, the high adhesion of the separator can also reduce the relative movement of the electrode plates caused by external mechanical forces, alleviate the impacts, and reduce the fracture rate of the electrode tabs, thereby further improving the mechanical reliability of the fast-charging secondary battery and reducing the internal resistance of the fast-charging secondary battery. Furthermore, the other side of the separator has the second adhesive coating layer, which increases the gap with the electrode plate, and expands the electrolyte solution transmission channel. In this way, the space for storing electrolyte solution increases, and the fast-charging secondary battery can have a high electrolyte solution retention (such as 1.5 g/Ah to 2.4 g/Ah), ensuring sufficient electrolyte solution at the head, tail, and middle part of the fast-charging secondary battery during the cycling process. This provides sufficient ion channels to meet the cycling requirements of the fast-charging secondary battery, thereby enabling the fast-charging secondary battery to have good cycling performance. Thus, in this application, the separator and the multi-tab structure have a good synergistic effect, which can balance the kinetic performance, cycling performance, and mechanical reliability of the fast-charging secondary battery.

In an embodiment of this application, $N_1$ layers of the positive electrode plate are disposed between two adjacent positive electrode tabs, and $N_2$ layers of the negative electrode plate are disposed between two adjacent negative electrode tabs, where $N_1$ and $N_2$ are each independently selected from 0, 1, 2, or 3. As shown in FIG. 1, in the wound electrode assembly, viewed from top to bottom in the figure, 0 layer of the positive electrode plate 10 is disposed between any two adjacent positive electrode tabs 12, and 0 layer of the negative electrode plate 20 is disposed between any two adjacent negative electrode tabs 22. As shown in FIG. 2, in the wound electrode assembly, viewed from top to bottom in the figure, 1 layer of the positive electrode plate 10 and 2 layers of the positive electrode plate 10 are respectively disposed between two adjacent positive electrode tabs 12, and 0 layer of the negative electrode plate 20 and 3 layers of the negative electrode plate 20 are respectively disposed between two adjacent negative electrode tabs 22. By controlling $N_1$ and $N_2$ within the above ranges, the fast-charging secondary battery can have a sufficient number of positive electrode tabs and negative electrode tabs on the positive electrode plate and the negative electrode plate, thereby providing a plurality of current channels on the positive electrode plate and the negative electrode plate. This can reduce the internal resistance of the secondary battery, and reduce the charging temperature rise and shorten the charging time of the fast-charging secondary battery, thereby enabling the fast-charging secondary battery to have good kinetic performance while balancing cycling performance and mechanical reliability. It can be understood that controlling $N_1$ and $N_2$ to 0 allows for more current channels on the positive electrode plate and the negative electrode plate, further reducing the internal resistance of the secondary battery. This can further reduce the charging temperature rise and further shorten the charging time of the fast-charging secondary battery, thereby further improving the kinetic performance of the fast-charging secondary battery while balancing its cycling performance and mechanical reliability. However, this reduces the energy density of the secondary battery to some extent. Adjusting $N_1$ and $N_2$ to 1, 2, or 3 can reduce the number of electrode tabs and increase the internal resistance to some extent, but can improve the energy density of the battery.

In an embodiment of this application, $N_1$ layers of the positive electrode plate are disposed between two adjacent positive electrode tabs, and $N_2$ layers of the negative electrode plate are disposed between two adjacent negative

electrode tabs, where $N_1$ and $N_2$ are each independently selected from 0. As shown in FIG. 1, in the wound electrode assembly, viewed from top to bottom in the figure, 0 layer of the positive electrode plate 10 is disposed between any two adjacent positive electrode tabs 12, and 0 layer of the negative electrode plate 20 is disposed between any two adjacent negative electrode tabs 22. By controlling $N_1$ and $N_2$ to 0, more positive electrode plates and negative electrode plates in the fast-charging secondary battery can have positive electrode tabs and negative electrode tabs, thereby providing more current channels on the positive electrode plate and the negative electrode plate. This can further reduce the internal resistance of the secondary battery, to further reduce the charging temperature rise and shorten the charging time of the fast-charging secondary battery, thereby further improving the kinetic performance of the fast-charging secondary battery while balancing its cycling performance and mechanical reliability. However, this reduces the energy density to some extent.

In an embodiment of this application, the first adhesive coating layer is disposed on a side of the separator substrate closer to the negative electrode plate, and the second adhesive coating layer is disposed on a side of the separator substrate closer to the positive electrode plate. As shown in FIG. 5, the first adhesive coating layer 32 is disposed on a side of the separator substrate 31 closer to the negative electrode plate 20, and the second adhesive coating layer 33 is disposed on a side of the separator substrate 31 closer to the positive electrode plate 10. Most secondary batteries primarily require fast charging for energy replenishment, but have no demand for fast discharging, meaning that the charging rate is much greater than the discharging rate. The charging process of a secondary battery mainly involves the intercalation of lithium ions into the negative electrode, so arranging the highly adhesive coating layer with small separator particles on the negative electrode plate side can shorten the lithium ion transmission path during the charging process, achieving a faster charging speed.

In an embodiment of this application, the average particle size of the first polymer binder is in a range of 0.6 μm to 1.6 μm. In another embodiment of this application, the average particle size of the second polymer binder is in a range of 8 μm to 12 μm. In still another embodiment of this application, the average particle size of the first polymer binder is in a range of 0.6 μm to 1.6 μm, and the average particle size of the second polymer binder is in a range of 8 μm to 12 μm. For example, the average particle size of the first polymer binder is 0.6 μm, 0.8 μm, 1.0 μm, 1.6 μm, or any value in a range defined by any two of the above values. For example, the average particle size of the second polymer binder is 8 μm, 9 μm, 10 μm, 11 μm, 12 μm, or any value in a range defined by any two of the above values. Controlling the average particle size of the first polymer binder within the above range facilitates the uniform distribution of the first polymer binder in the first adhesive coating layer, and allows for an appropriate gap between the particles of the first polymer binder, enabling the highly adhesive coating layer to have stronger adhesion. This also helps control the thickness of the first adhesive coating layer within an appropriate range, thereby further improve the kinetic performance and mechanical reliability of the fast-charging secondary battery and maintaining a high energy density while ensuring the cycling performance of the fast-charging secondary battery. Controlling the average particle size of the second polymer binder within the above range allows for an appropriate gap between the separator and the positive electrode plate or the negative electrode plate, which facilitates electrolyte solution transmission, and also helps control the thickness of the second adhesive coating layer within an appropriate range. This further improves the cycling performance and kinetic performance of the fast-charging secondary battery and allows the fast-charging secondary battery to have a high energy density while ensuring the mechanical reliability of the fast-charging secondary battery.

This application does not particularly limit the method of controlling the average particle size of the first polymer binder and the average particle size of the second polymer binder, as long as the objective of this application can be achieved. For example, the first polymer binder and second polymer binder with the average particle sizes within the ranges of this application may be purchased, or the first polymer binder and second polymer binder with corresponding average particle sizes may be obtained by methods such as grinding, sieving, or particle size distribution testing.

In an embodiment of this application, as shown in FIG. 6 to FIG. 9, a thickness $H_1$ of the first adhesive coating layer 32 is in a range of 0.2 μm to 4 μm. For example, the thickness $H_1$ of the first adhesive coating layer is 0.2 μm, 0.5 μm, 1 μm, 1.5 μm, 2 μm, 2.5 μm, 3 μm, 3.5 μm, 4 μm, or any value in a range defined by any two of the above values. When the particle size of the first polymer binder in the first adhesive coating layer is small, the adhesion of the first adhesive coating layer is strong. By controlling the thickness of the first adhesive coating layer within the above range, the first adhesive coating layer has an appropriate thickness, which can reduce the risk of energy density loss caused by an excessively large volume of the fast-charging secondary battery due to excessive thickness, while ensuring the adhesion of the first adhesive coating layer. As a result, the energy density of the fast-charging secondary battery is improved, and the transmission path of lithium ions in the active material layer corresponding to the first adhesive coating layer is shortened. This allows the fast-charging secondary battery to balance the kinetic performance, cycling performance, and mechanical reliability, and also improves the energy density of the fast-charging secondary battery.

In an embodiment of this application, as shown in FIG. 6 to FIG. 9, a thickness $H_2$ of the second adhesive coating layer 33 is in a range of 5 μm to 20 μm. For example, the thickness $H_2$ of the second adhesive coating layer is 5 μm, 6 μm, 8 μm, 10 μm, 12 μm, 14 μm, 16 μm, 18 μm, 20 μm, or any value in a range defined by any two of the above values. The particle size of the second polymer binder in the second adhesive coating layer is large, allowing formation of channels for electrolyte solution flow. By controlling the thickness of the second adhesive coating layer within the above range, the second adhesive coating layer has an appropriate thickness, which can reduce the risk of energy density loss caused by an excessively large volume of the fast-charging secondary battery due to excessive thickness, while ensuring good fluidity and wettability of the electrolyte solution in the electrode plate and the separator. This allows the fast-charging secondary battery to balance the kinetic performance, cycling performance, and mechanical reliability, and also improves the energy density of the fast-charging secondary battery.

In an embodiment of this application, a single-sided coating weight of the first adhesive coating layer is in a range of 0.0001 mg/mm$^2$ to 0.001 mg/mm$^2$. For example, the single-sided coating weight of the first adhesive coating layer is 0.0001 mg/mm$^2$, 0.0002 mg/mm$^2$, 0.0003 mg/mm$^2$, 0.0004 mg/mm$^2$, 0.0005 mg/mm$^2$, 0.0006 mg/mm$^2$, 0.0007 mg/mm$^2$, 0.0008 mg/mm$^2$, 0.0009 mg/mm$^2$, 0.001 mg/mm$^2$, or any value in a range defined by any two of the above values. Controlling the single-sided coating weight of the first adhesive coating layer within the above range allows the first adhesive coating layer to fully exert its high adhesion characteristics to better bond the electrode plate and the separator, and also reduces the risk of energy density loss caused by an excessively large volume of the fast-charging secondary battery due to an excessively large single-sided coating weight. This allows the fast-charging secondary battery to have good mechanical reliability and high energy density while having good kinetic performance and cycling performance.

In an embodiment of this application, a single-sided coating weight of the second adhesive coating layer is in a range of 0.0004 mg/mm$^2$ to 0.002 mg/mm$^2$. For example, the single-sided coating weight of the second adhesive coating layer is 0.0004 mg/mm$^2$, 0.0008 mg/mm$^2$, 0.0012 mg/mm$^2$, 0.0016 mg/mm$^2$, 0.002 mg/mm$^2$, or any value in a range defined by any two of the above values. Controlling the single-sided coating weight of the first adhesive coating layer within the above range can fully realize the electrolyte solution flow channel between the electrode plate and the separator, improve the kinetic performance and cycling performance of the secondary battery, and also reduce the risk of energy density loss caused by an excessively large volume of the fast-charging secondary battery due to an excessively large single-sided coating weight. This allows the fast-charging secondary battery to have a high energy density while balancing the kinetic performance, cycling performance, and mechanical reliability.

In an embodiment of this application, a coverage rate $Cr_1$ of the first polymer binder in the first adhesive coating layer per unit area is in a range of 40% to 60%. For example, the coverage rate of the first polymer binder in the first adhesive coating layer per unit area is 40%, 42%, 44%, 46%, 48%, 50%, 52%, 54%, 56%, 58%, 60%, or any value in a range defined by any two of the above values. Controlling the coverage rate of the first polymer binder in the first adhesive coating layer per unit area within the above range can fully utilize the high adhesion characteristics of the first adhesive coating layer. This allows lithium ions to have a faster transmission speed while facilitating the adhesion between the separator and the electrode plate, enabling the secondary battery to have good kinetic performance.

In an embodiment of this application, the first polymer binder has a core-shell structure, and the first polymer binder includes a first shell and a first core, where a polymerization monomer of the first shell includes one or more selected from the group consisting of methyl acrylate, ethyl acrylate, butyl acrylate, methyl methacrylate, ethyl methacrylate, butyl methacrylate, ethylene, chloroethyl methacrylate, chlorostyrene, fluorostyrene, methylstyrene, acrylonitrile, and methacrylonitrile, and a polymerization monomer of the first core includes one or more selected from the group consisting of ethyl acrylate, butyl acrylate, ethyl methacrylate, styrene, chlorostyrene, fluorostyrene, methylstyrene, acrylic acid, methacrylic acid, and maleic acid. The above types of first polymer binders, when applied in the first adhesive coating layer, enable the first adhesive coating layer to have high adhesion.

In an embodiment of this application, the first polymer binder has a non-core-shell structure, and a polymerization monomer of the first polymer binder includes one or more selected from the group consisting of acrylic acid, methyl acrylate, butyl acrylate, butadiene, styrene, acrylonitrile, ethylene, fluorostyrene, chlorostyrene, and propylene. The above types of first polymer binders, when applied in the first adhesive coating layer, enable the first adhesive coating layer to have high adhesion.

In an embodiment of this application, the first adhesive coating layer includes a first polymer binder, a thickener, an auxiliary binder, and a wetting agent. The thickener, when applied in the first adhesive coating layer, can increase the stability of the first adhesive coating layer slurry and prevent the settling of various components in the first adhesive coating layer slurry. The auxiliary binder, when applied in the first adhesive coating layer, can bond the first polymer binder to the separator substrate and the ceramic coating layer during the application process of the first adhesive coating layer slurry. The wetting agent, when applied in the first adhesive coating layer, can reduce the surface energy of the first adhesive coating layer slurry and prevent missed application of the first adhesive coating layer slurry during the application process. This application does not particularly limit the percentages of the first polymer binder, thickener, auxiliary binder, and wetting agent in the first adhesive coating layer, as long as the objective of this application can be achieved. For example, based on a mass of the first adhesive coating layer, a mass percentage of the first polymer binder is 85% to 95%, a mass percentage of the thickener is 0.5% to 2%, a mass percentage of the auxiliary binder is 0% to 15%, and a mass percentage of the wetting agent is 4% to 10%.

This application does not particularly limit the types of the thickener, auxiliary binder, and wetting agent, as long as the objective of this application can be achieved. For example, the thickener includes but is not limited to sodium carboxymethyl cellulose. The auxiliary binder includes but is not limited to a homopolymer or a copolymer polymerized from at least one of the following monomers: ethyl acrylate, butyl acrylate, ethyl methacrylate, acrylic acid, methacrylic acid, maleic anhydride, dicarboxylic anhydride, acrylonitrile, butadiene, or monovinyl compound. This application does not particularly limit the types of the monovinyl compound, as long as the objective of this application can be achieved. For example, the monovinyl compound includes but is not limited to at least one of styrene, chlorostyrene, fluorostyrene, or methylstyrene.

In an embodiment of this application, a coverage rate $Cr_2$ of the second polymer binder in the second adhesive coating layer per unit area is in a range of 40% to 60%. For example, the coverage rate of the second polymer binder in the second adhesive coating layer per unit area is 40%, 42%, 44%, 46%, 48%, 50%, 52%, 54%, 56%, 58%, 60%, or any value in a range defined by any two of the above values. Controlling the coverage rate of the second polymer binder in the second adhesive coating layer per unit area within the above range can fully realize the electrolyte solution flow channel between the electrode plate and the separator. When the electrolyte solution has good flow and wettability in the electrode plate and the separator, the second adhesive coating layer has an appropriate thickness, thereby reducing the risk of energy density loss caused by an excessively large volume of the fast-charging secondary battery due to excessive thickness. This allows the fast-charging secondary battery to balance the kinetic performance, cycling performance, and mechanical reliability, and also improves the energy density of the fast-charging secondary battery.

In an embodiment of this application, the second polymer binder has a core-shell structure, and the second polymer binder includes a second shell and a second core, where a polymerization monomer of the second shell includes one or more selected from the group consisting of vinylidene chloride, vinylidene fluoride, hexafluoropropylene, styrene, butadiene, acrylonitrile, acrylic acid, methyl acrylate, and butyl acrylate, and a polymerization monomer of the second core includes one or more selected from the group consisting of ethyl methacrylate, methyl acrylate, ethyl acrylate, butyl acrylate, methyl methacrylate, butyl methacrylate, and chloroethyl methacrylate. The use of the above types of second polymer binders can create a large gap between the second adhesive coating layer and the positive/negative electrode plates.

In an embodiment of this application, the second polymer binder has a non-core-shell structure, and a polymerization monomer of the second polymer binder includes one or more selected from the group consisting of vinylidene chloride, vinylidene fluoride, hexafluoropropylene, ethylene, propylene, vinyl chloride, chloropropylene, acrylic acid, methyl acrylate, butyl acrylate, styrene, butadiene, and acrylonitrile. The use of the above types of second polymer binders can create a large gap between the second adhesive coating layer and the positive/negative electrode plates.

In an embodiment of this application, the second adhesive coating layer includes a second polymer binder and an auxiliary binder. The auxiliary binder, when applied in the second adhesive coating layer, can bond the second polymer binder to the separator substrate and the ceramic coating layer during the application process of the second adhesive coating layer slurry. This application does not particularly limit the percentages of the second polymer binder and the auxiliary binder in the second adhesive coating layer, as long as the objective of this application can be achieved. For example, based on a mass of the second adhesive coating layer, a mass percentage of the second polymer binder is 85% to 95%, and a mass percentage of the auxiliary binder is 5% to 15%.

In an embodiment of this application, the separator further includes a ceramic coating layer, where the ceramic coating layer is disposed between the separator substrate and the first adhesive coating layer. As shown in FIG. 7, the separator 30 includes a separator substrate 31, a first adhesive coating layer 32, a second adhesive coating layer 33, and a ceramic coating layer 34. The first adhesive coating layer 32 and the second adhesive coating layer 33 are respectively disposed on two sides of the separator substrate 31. The ceramic coating layer 34 is disposed between the separator substrate 31 and the first adhesive coating layer 32, and the second adhesive coating layer 33 is adjacent to a surface of the separator substrate 31 far away from the ceramic coating layer 34. The ceramic coating layer has good hardness and heat resistance. By arranging the ceramic coating layer between the separator and the first adhesive coating layer, the ceramic coating layer can prevent the separator from shrinking at high temperatures, improving the hardness and heat resistance of the secondary battery. This further improves the mechanical reliability while enabling the fast-charging secondary battery to have good thermal safety performance. Additionally, the fast-charging secondary battery has good kinetic performance and cycling performance. By arranging the ceramic coating layer 34 between the separator substrate 31 and the first adhesive coating layer 32, a certain amount of electrolyte solution can also be stored, and additional electrolyte solution flow channels are provided, improving the kinetic performance of the secondary battery.

In an embodiment of this application, the separator further includes a ceramic coating layer, where the ceramic coating layer is disposed between the separator substrate and the second adhesive coating layer. As shown in FIG. 8, the separator 30 includes a separator substrate 31, a first adhesive coating layer 32, a second adhesive coating layer 33, and a ceramic coating layer 34. The first adhesive coating layer 32 and the second adhesive coating layer 33 are respectively disposed on two sides of the separator substrate 31. The ceramic coating layer 34 is disposed between the separator substrate 31 and the second adhesive coating layer 33, and the first adhesive coating layer 32 is adjacent to a surface of the separator substrate 31 far away from the ceramic coating layer 34. The ceramic coating layer has good hardness and heat resistance. By arranging the ceramic coating layer between the separator substrate and the second adhesive coating layer, the ceramic coating layer can prevent the separator from shrinking at high temperatures, improving the hardness and heat resistance of the secondary battery. This further improves the mechanical reliability while enabling the fast-charging secondary battery to have good thermal safety performance. Additionally, the fast-charging secondary battery has good kinetic performance and cycling performance. In this application, preferably, the second adhesive coating layer 33 faces the positive electrode plate, and the ceramic coating layer 34 disposed between the separator substrate 21 and the second adhesive coating layer 33 can store electrolyte solution, and can also provide additional electrolyte solution channels in addition to the electrolyte solution channels formed by the second adhesive coating layer 33. This can reduce the thickness of the second adhesive coating layer 33, improve energy density, and protect the separator substrate 31 from oxidation under the high voltage of the positive electrode, and can also reduce the coating thickness of the second adhesive coating layer 33.

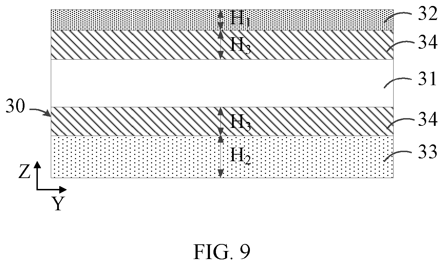

In an embodiment of this application, the separator further includes a ceramic coating layer, where the ceramic coating layer is disposed between the separator substrate and the first adhesive coating layer, and the ceramic coating layer is further disposed between the separator substrate and the second adhesive coating layer. As shown in FIG. 9, the separator 30 includes a separator substrate 31, a first adhesive coating layer 32, a second adhesive coating layer 33, and two ceramic coating layers 34. The first adhesive coating layer 32 and the second adhesive coating layer 33 are respectively disposed on two sides of the separator substrate 31. One ceramic coating layer 34 is disposed between the separator substrate 31 and the first adhesive coating layer 32, and the other ceramic coating layer 34 is disposed between the separator substrate 31 and the second adhesive coating layer 33. It should be noted that the two ceramic coating layers may be the same or different. The ceramic coating layer has good hardness and heat resistance. By arranging a ceramic coating layer in the separator, the hardness and heat resistance of the fast-charging secondary battery can be improved. This further improves the mechanical reliability while enabling the fast-charging secondary battery to have good thermal safety performance. Additionally, the fast-charging secondary battery has good kinetic performance and cycling performance. Arranging ceramic coating layers 34 on two sides of the separator substrate 31 can achieve the advantages of the above two arrangement schemes of the ceramic coating layer 34, but this increases the costs and reduces the energy density.

In an embodiment of this application, the ceramic coating layer includes ceramic particles, an average particle size of the ceramic particles being in a range of 1 $\mu$m to 3 $\mu$m. For example, the average particle size of the ceramic particles is 1 $\mu$m, 1.5 $\mu$m, 2 $\mu$m, 2.5 $\mu$m, 3 $\mu$m, or any value in a range defined by any two of the above values. By controlling the average particle size of the ceramic particles within the above range, the risk of agglomeration of the ceramic particles in the ceramic coating layer is low, and the thickness of the ceramic coating layer can be controlled within an appropriate range while maintaining heat resistance and high hardness. This allows the fast-charging secondary battery to have good thermal safety performance while balancing the kinetic performance, cycling performance, and mechanical reliability.

This application does not particularly limit the method of controlling the average particle size of the ceramic particles, as long as the objective of this application can be achieved. For example, methods such as mechanical crushing or grinding can be used, or ceramic particles with the average particle sizes meeting the requirements of this application can be directly purchased.

In an embodiment of this application, the ceramic particles include one or more selected from the group consisting of aluminum oxide, boehmite, titanium dioxide, silicon dioxide, zirconium dioxide, tin dioxide, magnesium hydroxide, magnesium oxide, zinc oxide, barium sulfate, boron nitride, aluminum nitride, and silicon nitride. The use of the above types of ceramic particles enables the ceramic coating layer to have high hardness and good heat resistance.

In an embodiment of this application, as shown in FIG. 7 to FIG. 9, a thickness $H_3$ of the ceramic coating layer 34 is in a range of 0.5 $\mu$m to 6 $\mu$m. For example, the thickness $H_3$ of the ceramic coating layer is 0.5 $\mu$m, 1 $\mu$m, 2 $\mu$m, 3 $\mu$m, 4 $\mu$m, 5 $\mu$m, 6 $\mu$m, or any value in a range defined by any two of the above values. Controlling the thickness of the ceramic coating layer within the above range helps keep the volume increase of the fast-charging secondary battery relatively small while facilitating high hardness and good heat resistance of the ceramic coating layer. This can reduce the probability of energy density loss of the fast-charging secondary battery caused by increased thickness of the ceramic coating layer, thereby enabling the fast-charging secondary battery to have good thermal safety performance and energy density while balancing the kinetic performance, cycling performance, and mechanical reliability.

In an embodiment of this application, the ceramic coating layer includes ceramic particles and a ceramic coating layer binder. This application does not particularly limit the type of the ceramic coating layer binder, as long as the objective of this application can be achieved. For example, the ceramic coating layer binder includes but is not limited to at least one of polyvinylidene fluoride, polyacrylic acid, polymethyl methacrylate, polybutyl acrylate, or polyacrylonitrile. This application does not particularly limit the percentages of the ceramic particles and ceramic coating layer binder in the ceramic coating layer, as long as the objective of this application can be achieved. For example, based on a mass of the ceramic coating layer, a mass percentage of ceramic particles is 5% to 95%, and a mass percentage of ceramic coating layer binder is 5% to 95%.

This application does not particularly limit the separator substrate, as long as the objective of this application can be achieved. For example, the structure of the separator substrate includes a single-layer structure or a multi-layer composite structure, where the multi-layer composite structure may be a double-layer composite structure, a triple-layer composite structure, or a four-layer composite structure. The types of the separator substrate includes at least one of polyethylene (PE), polypropylene (PP), or polyethylene terephthalate (PET). A thickness of the separator substrate may be 3 $\mu$m to 20 $\mu$m.

The positive electrode plate of this application further includes a positive electrode active material layer, where the positive electrode active material layer is disposed on at least one surface of the positive electrode body region of the positive electrode current collector. In some embodiments, the positive electrode active material layer is disposed on one surface of the positive electrode body region of the positive electrode current collector. In other embodiments, the positive electrode active material layer is disposed on two surfaces of the positive electrode body region of the positive electrode current collector. The "surface" may be a partial surface or an entire surface of the positive electrode body region of the positive electrode current collector. This application does not particularly limit the type of the positive electrode current collector, as long as the objective of this application can be achieved. For example, the positive electrode current collector may include aluminum foil, aluminum alloy foil, and the like. The positive electrode active material layer of this application includes a positive electrode active material. This application does not particularly limit the type of the positive electrode active material, as long as the objective of this application can be achieved. For example, the positive electrode active material may include but is not limited to at least one of lithium nickel cobalt manganese oxide ($LiNi_{0.8}Co_{0.1}Mn_{0.1}O_2$), lithium nickel cobalt aluminum oxide, lithium iron phosphate, lithium-rich manganese-based materials, lithium cobalt oxide ($LiCoO_2$), lithium manganese oxide, lithium manganese iron phosphate, or the like. In this application, the positive electrode active material may further include a non-metallic element. For example, the non-metallic element includes at least one of fluorine, phosphorus, boron, chlorine, silicon, or sulfur. These elements can further improve the stability of the positive electrode active material. In this application, there are no particular restrictions on the thicknesses of the positive electrode current collector and the positive electrode active material layer, as long as the objective of this application can be achieved. For example, the thickness of the positive electrode current collector is 5 $\mu$m to 20 $\mu$m, and further, the thickness of the positive electrode current collector may be 6 $\mu$m to 18 $\mu$m. The thickness of the positive electrode active material layer is 30 $\mu$m to 120 $\mu$m.

Optionally, the positive electrode active material layer may further include a positive electrode conductive agent and a positive electrode binder. This application does not particularly limit the types of the positive electrode conductive agent and positive electrode binder in the positive electrode active material layer, as long as the objective of this application can be achieved. This application does not particularly limit the mass ratio of the positive electrode active material, positive electrode conductive agent, and positive electrode binder in the positive electrode active material layer, which can be selected by those skilled in the art according to actual needs, as long as the objective of this application can be achieved. For example, the mass ratio of the positive electrode active material, positive electrode conductive agent, and positive electrode binder in the positive electrode active material layer is (95-98):(0.5-2.5):(1.5-3.4).

The negative electrode plate of this application further includes a negative electrode active material layer, where the negative electrode active material layer is disposed on at least one surface of the negative electrode body region of the negative electrode current collector. In some embodiments, the negative electrode active material layer is disposed on one surface of the negative electrode body region of the negative electrode current collector. In some other embodiments, the negative electrode active material layer is disposed on two surfaces of the negative electrode body region of the negative electrode current collector. The "surface" may be a partial surface or an entire surface of the negative electrode body region of the negative electrode current collector. This application does not particularly limit the type of the negative electrode current collector, as long as the objective of this application can be achieved. For example, the negative electrode current collector includes but is not limited to Cu, Ni, and the like. The negative electrode active material layer of this application contains a negative electrode active material. This application does not particularly limit the type of the negative electrode active material, as long as the objective of this application can be achieved. For example, the negative electrode active material may include but is not limited to at least one of natural graphite, artificial graphite, mesocarbon microbeads (MCMB), hard carbon, soft carbon, silicon, silicon-carbon composite, $SiO_x$ (0<x<2), Li-Sn alloy, Li-Sn-O alloy, Sn, SnO, $SnO_2$, Li-Al alloy, or metallic lithium. In this application, there are no particular restrictions on the thicknesses of the negative electrode current collector and the negative electrode active material layer, as long as the objective of this application can be achieved. For example, the thickness of the negative electrode current collector is 6 $\mu$m to 10 $\mu$m, and the thickness of the negative electrode active material layer is 30 $\mu$m to 130 $\mu$m.

Optionally, the negative electrode active material layer may further include at least one of a negative electrode conductive agent, a stabilizer, or a negative electrode binder. This application does not particularly limit the types of the negative electrode conductive agent, stabilizer, and negative electrode binder in the negative electrode active material layer, as long as the objective of this application can be achieved. This application does not particularly limit the mass ratio of the negative electrode active material, negative electrode conductive agent, stabilizer, and negative electrode binder in the negative electrode active material layer, as long as the objective of this application can be achieved. For example, the mass ratio of the negative electrode active material, negative electrode conductive agent, stabilizer, and negative electrode binder in the negative electrode active material layer is (96-98):(0.5-2):(0-1.5):(1.0-1.9).

In an embodiment of this application, the fast-charging secondary battery further includes a housing, where the electrode assembly and the electrolyte solution are accommodated in the housing. This application does not particularly limit the housing, which may be any housing known in the art, as long as the objective of this application can be achieved. For example, the housing includes but is not limited to aluminum-plastic film or steel housing.

This application does not particularly limit the type of the fast-charging secondary battery, which may include any apparatus where electrochemical reactions take place. For example, the fast-charging secondary battery may include but is not limited to: a lithium metal secondary battery, a lithium-ion secondary battery (a lithium-ion battery), a sodium-ion secondary battery (a sodium-ion battery), a lithium polymer secondary battery, or a lithium-ion polymer secondary battery.

The fast-charging secondary battery of this application can be used under a charging rate of 5C to 15C. For example, the charging rate may be 5C, 6C, 7C, 8C, 9C, 10C, 11C, 12C, 13C, 14C, 15C, or any rate in a range defined by any two of the above rates.

This application does not particularly limit the preparation method of the separator, as long as the objective of this application can be achieved.

For example, in one embodiment, the preparation method of the separator includes but is not limited to the following steps: (1) mixing the first polymer binder, thickener, auxiliary binder, and wetting agent well to obtain a first adhesive coating layer slurry; (2) mixing the second polymer binder and auxiliary binder well to obtain a second adhesive coating layer slurry; and (3) applying the first adhesive coating layer slurry onto one surface of the separator substrate, followed by drying, to form a first adhesive coating layer on one surface of the separator substrate; and applying the second adhesive coating layer slurry onto the other surface of the separator substrate, followed by drying, to form a second adhesive coating layer on the other surface of the separator substrate, thereby obtaining the separator.

For example, in another embodiment, the preparation method of the separator includes but is not limited to the following steps: (1) mixing the first polymer binder, thickener, auxiliary binder, and wetting agent well to obtain a first adhesive coating layer slurry; (2) mixing the second polymer binder and auxiliary binder well to obtain a second adhesive coating layer slurry; (3) mixing the ceramic particles and ceramic coating layer binder well to obtain a ceramic coating layer slurry; and (4) applying the ceramic coating layer slurry onto one surface of the separator substrate, followed by drying, to form a ceramic coating layer on one surface of the separator substrate; applying the first adhesive coating layer slurry onto a surface of the ceramic coating layer, followed by drying, to form a first adhesive coating layer on the surface of the ceramic coating layer far away from the separator substrate; and applying the second adhesive coating layer slurry on the other surface of the separator substrate, followed by drying, to form a second adhesive coating layer on the other surface of the separator substrate, thereby obtaining the separator.

For example, in still another embodiment, the preparation method of the separator includes but is not limited to the following steps: (1) mixing the first polymer binder, thickener, auxiliary binder, and wetting agent well to obtain a first adhesive coating layer slurry; (2) mixing the second polymer binder and auxiliary binder well to obtain a second adhesive coating layer slurry; (3) mixing the ceramic particles and ceramic coating layer binder well to obtain a ceramic coating layer slurry; and (4) applying the ceramic coating layer slurry onto one surface of the separator substrate, followed by drying, to form a ceramic coating layer on one surface of the separator substrate; applying the second adhesive coating layer slurry onto the surface of the ceramic coating layer, followed by drying, to form a second adhesive coating layer on the surface of the ceramic coating layer far away from the separator substrate; and applying the first adhesive coating layer slurry on the other surface of the separator substrate, followed by drying, to form a first adhesive coating layer on the other surface of the separator substrate, thereby obtaining the separator.

For example, in still another embodiment, the preparation method of the separator includes but is not limited to the following steps: (1) mixing the first polymer binder, thickener, auxiliary binder, and wetting agent well to obtain a first adhesive coating layer slurry; (2) mixing the second polymer binder and auxiliary binder well to obtain a second adhesive coating layer slurry; (3) mixing the ceramic particles and ceramic coating layer binder well to obtain a ceramic coating layer slurry; and (4) applying the ceramic coating layer slurry onto one surface of the separator substrate, followed by drying, to form a ceramic coating layer on one surface of the separator substrate; applying the ceramic coating layer slurry onto the other surface of the separator, followed by drying, to form a ceramic coating layer on the other surface of the separator substrate; applying the second adhesive coating layer slurry onto the surface of the first ceramic coating layer far away from the separator substrate, followed by drying, to form a second adhesive coating layer on the surface of the first ceramic coating layer far away from the separator substrate; and applying the first adhesive coating layer slurry onto the surface of the second ceramic coating layer far away from the separator substrate, followed by drying, to form a first adhesive coating layer on the surface of the second ceramic coating layer far away from the separator substrate, thereby obtaining the separator.

This application does not particularly limit the solid content of the first adhesive coating layer slurry, as long as the objective of this application can be achieved. For example, the solid content of the first adhesive coating layer slurry is 3wt% to 6wt%. This application does not particularly limit the solid content of the second adhesive coating layer slurry, as long as the objective of this application can be achieved. For example, the solid content of the second adhesive coating layer slurry is 8wt% to 12wt%. This application does not particularly limit the solid content of the ceramic coating layer slurry, as long as the objective of this application can be achieved. For example, the solid content of the ceramic coating layer slurry is 30wt% to 40wt%. This application does not particularly limit the temperature and time of the drying, which can be selected and adjusted by those skilled in the art according to actual needs, as long as the objective of this application can be achieved.

This application does not particularly limit the preparation method of the positive electrode plate, as long as the objective of this application can be achieved. For example, the preparation method of the positive electrode plate includes but is not limited to the following steps: (1) die-cutting the positive electrode tab region of the positive electrode current collector to make the positive electrode current collector integrally extend to form a plurality of positive electrode tabs; (2) preparing a positive electrode slurry; (3) applying the positive electrode slurry onto one surface of the positive electrode body region of the positive electrode current collector, followed by drying, to form a positive electrode active material layer on one surface of the positive electrode body region of the positive electrode current collector; (4) applying the positive electrode slurry on the other surface of the positive electrode body region of the positive electrode current collector, followed by drying, to form a positive electrode active material layer on each of the two surfaces of the positive electrode body region of the positive electrode current collector; and (5) performing cold pressing, cutting, and slitting, to obtain the positive electrode plate. This application does not particularly limit the percentages and types of various components in the positive electrode slurry in the above step (2), which can be selected by those skilled in the art according to actual conditions, as long as the objective of this application can be achieved. This application does not particularly limit the solid content of the positive electrode slurry in the above step (2), as long as the objective of this application can be achieved. This application does not particularly limit the drying time and temperature in the above steps (3) and (4), as long as the objective of this application can be achieved. This application does not particularly limit the process parameters of the cold pressing in the above step (5), as long as the objective of this application can be achieved.

This application does not particularly limit the preparation method of the negative electrode plate, as long as the objective of this application can be achieved. For example, the preparation method of the negative electrode plate includes but is not limited to the following steps: (1) die-cutting the negative electrode tab region of the negative electrode current collector to make the negative electrode current collector integrally extend to form a plurality of negative electrode tabs; (2) preparing a negative electrode slurry; (3) applying the negative electrode slurry onto one surface of the negative electrode body region of the negative electrode current collector, followed by drying, to form a negative electrode active material layer on one surface of the negative electrode body region of the negative electrode current collector; (4) applying the negative electrode slurry on the other surface of the negative electrode body region of the negative electrode current collector, followed by drying, to form a negative electrode active material layer on each of the two surfaces of the negative electrode body region of the negative electrode current collector; and (5) performing cold pressing, cutting, and slitting, to obtain the negative electrode plate. This application does not particularly limit the percentages and types of various components in the negative electrode slurry in the above step (2), which can be selected by those skilled in the art according to actual conditions, as long as the objective of this application can be achieved. This application does not particularly limit the solid content of the negative electrode slurry in the above step (2), as long as the objective of this application can be achieved. This application does not particularly limit the drying time and temperature in the above steps (3) and (4), as long as the objective of this application can be achieved. This application does not particularly limit the process parameters of the cold pressing in the above step (5), as long as the objective of this application can be achieved.

This application does not particularly limit the preparation method of the fast-charging secondary battery, and any preparation method known in the art can be selected, as long as the objective of this application can be achieved. For example, the preparation method of the fast-charging secondary battery includes but is not limited to the following steps: stacking the positive electrode plate, the separator, and the negative electrode plate in order, and performing an operation such as winding or folding on the resulting stack as needed to obtain a wound electrode assembly; leading a plurality of positive electrode tabs out by spot welding, and leading a plurality of negative electrode tabs out by spot welding; and placing the electrode assembly into a housing, injecting electrolyte solution into the housing, and sealing the housing, to obtain a fast-charging secondary battery.

A second aspect of this application provides an electrical apparatus including the fast-charging secondary battery according to any one of the foregoing embodiments. Therefore, the electrical apparatus has good usage performance.

The electrical apparatus of this application is not particularly limited, and may be any electrical apparatus known in the prior art. For example, the electrical apparatus may include but is not limited to: a laptop computer, a pen-input computer, a mobile computer, an e-book player, a portable telephone, a portable fax machine, a portable copier, a portable printer, a head-mounted stereo headphone, a video recorder, a liquid crystal television, a portable cleaner, a portable CD player, a mini-disc, a transceiver, an electronic notebook, a calculator, a memory card, a portable recorder, a radio, a backup power supply, a motor, an automobile, a motorcycle, an electric bicycle, a bicycle, a lighting fixture, a toy, a game console, a clock, an electric tool, a flashlight, a camera, a large household storage battery, and a lithium-ion capacitor.

## Examples

The following describes the embodiments of this application more specifically by using examples and comparative examples. Various tests and evaluations are conducted according to the methods described below.

### Test methods and equipment:

### Test on average particle size:

The average particle size of the first polymer binder and the second polymer binder can be measured by observing the cross-section of the separator with a scanning electron microscope (SEM), and the diameters of 10 particles of the first polymer binder or the second polymer binder are measured to obtain the average value.

For the average particle size of ceramic particles, the cross-section of the separator can be observed using a scanning electron microscope (SEM), and the diameters of 10 ceramic particles can be measured to obtain the average value.

### Test on single-sided coating weight of first adhesive coating layer:

After discharged, the lithium-ion battery of each example and comparative example is disassembled to obtain the separator. After impurities on the surface of the separator are cleaned with dimethyl carbonate (DMC), the separator is dried at 60°C to obtain a test sample separator. Small circular pieces are punched out from the separator, the mass of the separator is weighed and recorded as $m_1$, then the first adhesive coating layer is peeled off, and the mass of the separator with the first adhesive coating layer peeled off is recorded as $m_2$. Single-sided coating weight of the first adhesive coating layer = $(m_1 - m_2)/S$, where S is the area of the small circular piece.

### Test on single-sided coating weight of second adhesive coating layer:

After discharged, the lithium-ion battery of each example and comparative example is disassembled to obtain the separator. After impurities on the surface of the separator are cleaned with dimethyl carbonate (DMC), the separator is dried at 60°C to obtain a test sample separator. Small circular pieces are punched out from the separator, the mass of the separator is weighed and recorded as $m_1$, then the second adhesive coating layer is peeled off, and the mass of the separator with the second adhesive coating layer peeled off is recorded as $m_2$. Single-sided coating weight of the second adhesive coating layer = $(m_1 - m_2)/S$, where S is the area of the small circular piece.

### Test on thickness of first adhesive coating layer:

The coated separator is subjected to argon ion polishing to obtain the cross-section of the separator, the cross-section is observed using a scanning electron microscope, and the thickness of the first adhesive coating layer is measured.

### Test on thickness of second adhesive coating layer:

The coated separator is subjected to argon ion polishing to obtain the cross-section of the separator, the cross-section is observed using a scanning electron microscope, and the thickness of the second adhesive coating layer is measured.

### Test on thickness of ceramic coating layer:

The coated separator is subjected to argon ion polishing to obtain the cross-section of the separator, the cross-section is observed using a scanning electron microscope, and the thickness of the ceramic coating layer is measured.

### Test on coverage rate of first polymer binder:

The surface of the separator coated with the first polymer binder on the side with the first adhesive coating layer is observed using a scanning electron microscope (SEM). The coverage rate is obtained by calculating the ratio of the area occupied by the first polymer binder in the electron micrograph by the area of the entire separator region sampled in the electron micrograph.

**Test on coverage rate of second polymer binder:**

The surface of the separator coated with the second polymer binder on the side with the second adhesive coating layer is observed using SEM. The coverage rate is obtained by calculating the ratio of the area occupied by the second polymer binder substance in the electron micrograph by the area of the entire separator region sampled in the electron micrograph.

**Test on adhesion $F_1$ of separator to positive electrode plate:**

The dry-pressing adhesion between the separator and the positive electrode plate is measured according to the 180° peel test standard (GB/T 6328-2008). The separator and the positive electrode plate are cut into 54.2 mm × 72.5 mm samples. The side of the separator with the second adhesive coating layer is compounded with the positive electrode plate, and hot-pressed using a hot press machine under the conditions of 85°C, 1 MPa, and 85s. The compounded samples are cut into 15 mm × 54.2 mm strips, and the adhesion is measured according to the 180° peel test standard.

**Test on adhesion $F_2$ of separator to negative electrode plate:**

The dry-pressing adhesion between the separator and the negative electrode plate is measured according to the 180° peel test standard (GB/T 6328-2008). The separator and the negative electrode plate are cut into 54.2 mm × 72.5 mm samples. The side of the separator with the first adhesive coating layer is compounded with the negative electrode plate, and hot-pressed using a hot press machine under the conditions of 85°C, 1 MPa, and 85s. The compounded samples are cut into 15 mm × 54.2 mm strips, and the adhesion is measured according to the 180° peel test standard.

**Test on kinetic performance:**

The kinetic performance of the lithium-ion batteries of each example and comparative example is measured under a charging rate of 10C. The specific steps are as follows:

The test temperature is adjusted to a constant temperature of 25°C. The temperature sensor line of the multi-channel thermometer is placed at the center of the surface of the lithium-ion battery. The following steps are performed: (1) charging at a constant current of 10C to 4.2 V; (2) charging at a constant current of 8C to 4.3 V; (3) charging at a constant current of 6C to 4.45 V; (4) charging at a constant voltage of 4.45 V to 0.05C; (5) standing for 30 min; (6) discharging at a constant current of 1C to 3.0 V; and (7) standing for 30 min; end.

Charging speed: the time from step (1) to step (4).

Charging temperature rise: the difference between the maximum temperature recorded by the temperature sensor line on the surface of the lithium-ion battery during steps (1) to (2) and the room temperature.

**Test on ohmic impedance:**

Test instrument: IM6E electrochemical workstation from Zahner, Germany. Test method: conventional EIS electrochemical impedance spectroscopy test method for lithium-ion batteries.

The ohmic impedance, charging speed, and charging temperature rise are used to characterize the kinetic performance. A lower ohmic impedance, shorter charging time, and smaller charging temperature rise indicate better kinetic performance.

**Test on cycling performance:**

The cycling performance of the lithium-ion batteries of each example and comparative example is measured under a charging rate of 10C. The specific steps are as follows:

The test temperature is adjusted to a constant temperature of 25°C. The test proceeds as follows: (1) charging at a constant current of 10C to 4.2 V; (2) charging at a constant current of 8C to 4.3 V; (3) charging at a constant current of 6C to 4.45 V; (4) charging at a constant voltage of 4.45 V to 0.05C; (5) standing for 5 min; (6) discharging at a constant current of 1C to 3.0 V; (7) standing for 5 min; (8) performing steps (1) to (7) for 1000 cycles (cls); end.

Capacity retention rate (%) = discharge capacity after 1000 cycles (cls) / discharge capacity of the first cycle × 100%.

**Test on mechanical reliability:**

The test temperature is adjusted to a constant temperature of 20°C. The lithium-ion battery is fully charged according to the following steps: charging at a constant current of 0.5C to 4.45 V, and charging at a constant voltage of 4.45 V to 0.05C. The lithium-ion battery is loaded into a drop fixture. The lithium-ion battery is dropped onto a concrete floor in a test environment of $20\pm5°C$: dropping once from a height of 1.5 m along each of the 6 faces of the housing of the lithium-ion battery, and dropping once along each of the 4 corners, that is, 10 rounds of testing in total. After the testing, the lithium-ion battery is disassembled.

Evaluation criteria: The lithium-ion battery is considered as passed if no fire, explosion, or smoke occurs after the testing, and no positive electrode tab or negative electrode tab is found broken after disassembly. Ten lithium-ion batteries are tested for each example and comparative example.

$$\text{Drop pass rate (\%)} = \text{number of passed lithium-ion batteries}/10 \times 100\%.$$

**Test on thermal safety performance:**

Hot box test for lithium-ion battery: First, the lithium-ion battery is charged to 4.45 V at 1.5C. Then, the fully charged lithium-ion battery is placed in an oven. The temperature is increased at a rate of 5°C/min to 135°C, and this temperature is maintained for 1 hour. The test is considered passed if the lithium-ion battery does not catch fire or explode. For each example and comparative example, 100 lithium-ion batteries are tested. Hot box test pass rate = Number of passed batteries/100 $\times$ 100%. The hot box test pass rate is used to characterize the thermal safety performance of the lithium-ion battery. A higher hot box test pass rate indicates better thermal safety performance.

**Example 1-1**

<Preparation of separator>

A single-layer polypropylene film with a thickness of 5 $\mu$m was used as the separator substrate.

The ceramic particles aluminum oxide, ceramic coating layer binder butadiene-styrene polymer (weight average molecular weight Mw=$7\times10^6$), and solvent deionized water were mixed in a mass ratio of 35:10:55. Specifically: first, 30 kg of butadiene-styrene polymer and deionized water were added to a 60L double planetary mixer and dispersed at 45°C for 3 hours; then, 16.1 kg of aluminum oxide ceramic particles were added to the mixer and dispersed at a high speed at 45°C for 2 hours; then, ball milling was performed for 1.5 hours using a nanogrinder, with the spherical zirconia beads with a diameter of 6 $\mu$m used as the grinding media, to obtain a ceramic coating layer slurry; where the average particle size of the ceramic particles was 2 $\mu$m.

The first polymer binder polyacrylic acid (Mw=$3\times10^3$), thickener sodium carboxymethyl cellulose (Mw=$9\times10^4$-$3\times10^5$), and wetting agent polyoxyethylene ether (Mw=$1\times10^3$-$8\times10^3$) were mixed in a mass ratio of 91:0.5:8.5, and deionized water was added as a solvent. The mixture was stirred well to produce a first adhesive coating layer slurry with a solid content of 75wt%; where the average particle size of the first polymer binder was 1.6 $\mu$m; and the first polymer binder had a non-core-shell structure.

The second polymer binder polyvinylidene fluoride (Mw=$8\times10^5$-$9\times10^5$) and auxiliary binder methacrylic acid were mixed in a mass ratio of 90:10, and deionized water was added as a solvent. The mixture was stirred well to produce a second adhesive coating layer slurry with a solid content of 75wt%; where the average particle size of the second polymer binder was 10 $\mu$m; and the second polymer binder had a non-core-shell structure.

The ceramic coating layer slurry was applied onto one surface of the separator substrate, followed by drying at 60°C, to form a ceramic coating layer on one surface of the separator substrate. The second adhesive coating layer slurry was applied onto the surface of the ceramic coating layer far away from the separator substrate, followed by drying at 60°C, to form a second adhesive coating layer on the surface of the ceramic coating layer far away from the separator substrate. The first adhesive coating layer slurry was applied onto the other surface of the separator substrate, followed by drying at 60°C, to form a first adhesive coating layer on the other surface of the separator substrate, thereby obtaining the separator (the structure is shown in FIG. 8, but is not limited to that in FIG. 8).

The single-sided coating weight of the first adhesive coating layer was $Cw_1$ = 0.0006 mg/mm$^2$, the thickness of the first adhesive coating layer was $H_1$ = 2 $\mu$m, the single-sided coating weight of the second adhesive coating layer was $Cw_2$ = 0.0012 mg/mm$^2$, and the thickness of the second adhesive coating layer was $H_2$ = 12 $\mu$m. The single-sided coating weight of the ceramic coating layer was $Cw_3$ = 0.0023 mg/mm$^2$, and the thickness of the ceramic coating layer was $H_3$ = 1 $\mu$m. The coverage rate $Cr_1$ of the first polymer binder in the first adhesive coating layer per unit area was 50%, and the coverage rate $Cr_2$ of the second polymer binder in the second adhesive coating layer per unit area was 50%.

<Preparation of positive electrode plate>

The positive electrode active material lithium cobalt oxide, positive electrode conductive agent super P (Super P), and positive electrode binder polyvinylidene fluoride (PVDF, Mw=$7\times10^6$) were mixed in a mass ratio of 96:2:2. N-methylpyrrolidone (NMP) was added as a solvent, and the mixture was stirred in a vacuum mixer until a uniform positive electrode slurry with a solid content of 75wt% was obtained. The positive electrode slurry was evenly applied onto the positive electrode body region on one surface of a 13 $\mu$m thick positive electrode current collector aluminum foil, followed by drying at 95°C, to obtain a positive electrode plate coated with the positive electrode active material layer on one side. Subsequently, the above steps were repeated the positive electrode body region on the other surface of the aluminum foil to obtain a positive electrode plate coated with the positive electrode active material layers on two sides. After cold pressing, cutting, and slitting, and vacuum-drying at 85°C for 4 h, a positive electrode plate with specifications of 60 mm $\times$ 1580 mm was obtained for use. The single-layer thickness of the positive electrode active material layer was 38.5 $\mu$m, and the thickness of the positive electrode plate was 90 $\mu$m. The positive electrode tab region of the positive electrode current collector integrally extended (the structure is shown in FIG. 3, but is not limited to that in FIG. 3) to form 20 positive electrode tabs. The compaction density of the positive electrode plate was 4.0 g/cm$^3$.

<Preparation of negative electrode plate>

The negative electrode active material artificial graphite, negative electrode conductive agent Super P, stabilizer carboxymethyl cellulose sodium (CMC-Na, Mw=$7\times10^5$), and negative electrode binder styrene-butadiene rubber (SBR, Mw=$5\times10^6$) were mixed in a mass ratio of 96.5:1.0:1.0:1.5. Then, deionized water was added as a solvent, and the mixture was stirred in a vacuum mixer until a uniform negative electrode slurry with a solid content of 51wt% was obtained. The negative electrode slurry was evenly applied onto the negative electrode body region on one surface of a 10 $\mu$m thick negative electrode current collector copper foil, followed by drying at 85°C, to obtain a negative electrode plate coated with the negative electrode active material layer on one side. Subsequently, the above steps were repeated on the negative electrode body region on the other surface of the copper foil to obtain a negative electrode plate coated with the negative electrode active material layers on two sides. Cold pressing, cutting, and slitting, and vacuum drying at 110°C for 4h were performed, to obtain a negative electrode plate with specifications of 62 mm $\times$ 1600 mm for use. The single-layer thickness of the negative electrode active material layer was 58.5 $\mu$m, and the thickness of the negative electrode plate was 127 $\mu$m. The negative electrode tab region of the negative electrode current collector integrally extended (the structure is shown in FIG. 4, but is not limited to that in FIG. 4) to form 20 negative electrode tabs. The compaction density of the negative electrode plate was 1.5 g/cm$^3$.

<Preparation of electrolyte solution>

In an environment with a water content of less than 10 ppm, n-propyl propionate, ethylene carbonate, and diethyl carbonate were mixed in a mass ratio of 40:30:30 as a solvent. The lithium salt lithium hexafluorophosphate (LiPF$_6$), the solvent, and the additive adiponitrile were mixed in a mass ratio of 8:90:2 to obtain the electrolyte solution.

<Preparation of lithium-ion battery>

The positive electrode plate, separator, and negative electrode plate were stacked in order, with the separator sandwiched between the positive electrode plate and the negative electrode plate to provide separation. The resulting stack was wound to obtain an electrode assembly. The positive electrode tabs were led out by spot-welding aluminum electrode tabs, and the negative electrode tabs were led out by spot-welding nickel electrode tabs. The first adhesive coating layer in the separator was close to the negative electrode plate, and the second adhesive coating layer was close to the positive electrode plate. After winding, the positive electrode plate in the electrode assembly was arranged as layers, and the negative electrode plate was arranged as layers. $N_1$ (=0) layers of the positive electrode plate were disposed between two adjacent positive electrode tabs, and $N_2$ (=0) layers of the negative electrode plate were disposed between two adjacent negative electrode tabs (the arrangement of positive and negative electrode tabs are shown in FIG. 1, but is not limited to that in FIG. 1).

The electrode assembly was placed in an aluminum-plastic film housing, dried, and then injected with electrolyte solution. After vacuum packaging, resting, formation, capacity testing, degassing, and trimming, a lithium-ion battery was obtained.

**Examples 1-2 to 1-9**

Other steps are the same as in Example 1-1 except that the relevant preparation parameters are adjusted according to Table 1.

### Example 1-10

Other steps are the same as in Example 1-1 except for $N_1=1$ and $N_2=1$. $N_1=1$ and $N_2=1$ are achieved by adjusting the number of positive electrode tabs and negative electrode tabs.

### Example 1-11

Other steps are the same as in Example 1-1 except for $N_1=2$ and $N_2=2$. $N_1=2$ and $N_2=2$ are achieved by adjusting the number of positive electrode tabs and negative electrode tabs.

### Examples 1-12 to 1-23

Other steps are the same as in Example 1-1 except that the relevant preparation parameters are adjusted according to Table 1.

### Example 1-24

<Preparation of lithium-ion battery>

Other steps are the same as in Example 1-1 except that the first adhesive coating layer in the separator is close to the positive electrode plate and the second adhesive coating layer is close to the negative electrode plate.
<Preparation of positive electrode plate>, <Preparation of negative electrode plate>, <Preparation of separator>, and <Preparation of electrolyte solution> are the same as in Example 1-1.

### Examples 2-1 to 2-4

Other steps are the same as in Example 1-1 except that the relevant preparation parameters are adjusted according to Table 2.

### Example 3-1

<Preparation of separator>

The ceramic coating layer slurry was applied onto one surface of the separator substrate, followed by drying at 60°C, to form a ceramic coating layer on one surface of the separator substrate. The first adhesive coating layer slurry was applied onto the surface of the ceramic coating layer far away from the separator substrate, followed by drying at 60°C, to form a first adhesive coating layer on the surface of the ceramic coating layer far away from the separator substrate. The second adhesive coating layer slurry was applied onto the other surface of the separator substrate, followed by drying at 60°C, to form a second adhesive coating layer on the other surface of the separator substrate, thereby obtaining the separator (the structure is shown in FIG. 7, but is not limited to that in FIG. 7).
Other steps are the same as in Example 1-1.
<Preparation of positive electrode plate>, <Preparation of negative electrode plate>, <Preparation of electrolyte solution>, and <Preparation of lithium-ion battery> are the same as in Example 1-1.

### Example 3-2

<Preparation of separator>

The ceramic coating layer slurry was applied onto one surface of the separator substrate, followed by drying at 60°C, to form a first ceramic coating layer on one surface of the separator substrate. The ceramic coating layer slurry was applied onto the other surface of the separator substrate, followed by drying at 60°C, to form a second ceramic coating layer on the other surface of the separator substrate. The second adhesive coating layer slurry was applied onto the surface of the first ceramic coating layer far away from the separator substrate, followed by drying at 60°C, to form a second adhesive coating layer on the surface of the first ceramic coating layer far away from the separator substrate. The first adhesive coating layer slurry was applied onto the surface of the second ceramic coating layer far away from the separator substrate, followed by drying at 60°C, to form a first adhesive coating layer on the surface of the second ceramic coating layer far away from the separator substrate, thereby obtaining the separator (the structure is shown in FIG. 9, but is not limited to that in FIG. 9).

Other steps are the same as in Example 1-1.

<Preparation of positive electrode plate>, <Preparation of negative electrode plate>, <Preparation of electrolyte solution>, and <Preparation of lithium-ion battery> are the same as in Example 1-1.

### Example 3-3

Other steps are the same as in Example 3-1 except that no ceramic coating layer is provided in <Preparation of separator>.

### Examples 3-4 to 3-12

Other steps are the same as in Example 1-1 except that the relevant preparation parameters are adjusted according to Table 4.

### Comparative Examples 1 to 4

Other steps are the same as in Example 1-1 except that the relevant preparation parameters are adjusted according to Table 1.

### Comparative Example 5

<Preparation of positive electrode plate>

The positive electrode active material lithium cobalt oxide, positive electrode conductive agent super P (Super P), and positive electrode binder polyvinylidene fluoride (PVDF, Mw=$7\times10^6$) were mixed in a mass ratio of 96:2:2. N-methylpyrrolidone (NMP) was added as a solvent, and the mixture was stirred in a vacuum mixer until a uniform positive electrode slurry with a solid content of 75wt% was obtained. The positive electrode slurry was evenly applied onto one surface of a 13 $\mu$m thick positive electrode current collector aluminum foil, followed by drying at 95°C, to obtain a positive electrode plate coated with the positive electrode active material layer on one side. Subsequently, the above steps were repeated on the other surface of the aluminum foil to obtain a positive electrode plate coated with the positive electrode active material layers on two sides. After cold pressing, cutting, and slitting, and vacuum drying at 85°C for 4h were performed, a positive electrode plate with specifications of 60 mm $\times$ 1580 mm was obtained for use, with a positive aluminum electrode tab welded to the surface of the positive electrode current collector. The single-layer thickness of the positive electrode active material layer was 38.5 $\mu$m, and the thickness of the positive electrode plate was 90 $\mu$m.

<Preparation of negative electrode plate>

The negative electrode active material artificial graphite, negative electrode conductive agent Super P, stabilizer carboxymethyl cellulose sodium (CMC-Na, Mw=$7\times10^5$), and negative electrode binder styrene-butadiene rubber (SBR, Mw=$5\times10^6$) were mixed in a mass ratio of 96.5:1.0:1.0:1.5. Then, deionized water was added as a solvent, and the mixture was stirred in a vacuum mixer until a uniform negative electrode slurry with a solid content of 51wt% was obtained. The negative electrode slurry was evenly applied onto one surface of a 10 $\mu$m thick negative electrode current collector copper foil, followed by drying at 85°C, to obtain a negative electrode plate coated with the negative electrode active material layer on one side. Subsequently, the above steps were repeated on the other surface of the copper foil to obtain a negative electrode plate coated with the negative electrode active material layers on two sides. After cold pressing, cutting, and slitting, and vacuum drying at 110°C for 4h were performed, a negative electrode plate with specifications of 62 mm $\times$ 1600 mm was obtained for use, with a negative nickel electrode tab welded to the surface of the negative electrode current collector. The single-layer thickness of the negative electrode active material layer was 58.5 $\mu$m, and the thickness of the negative electrode plate was 127 $\mu$m.

<Preparation of lithium-ion battery>

The positive electrode plate, separator, and negative electrode plate were stacked in order, with the separator sandwiched between the positive electrode plate and the negative electrode plate to provide separation. The resulting stack was wound to obtain an electrode assembly. The first adhesive coating layer in the separator was close to the negative electrode plate, and the second adhesive coating layer was close to the positive electrode plate. The electrode assembly was placed in an aluminum-plastic film housing, dried, and then injected with electrolyte solution. After vacuum packaging, resting, formation, capacity testing, degassing, and trimming were performed, a lithium-ion battery is obtained.

<Preparation of separator> and <Preparation of electrolyte solution> are the same as in Example 1-1.

**Comparative Example 6**

<Preparation of separator>

The ceramic coating layer slurry was applied onto one surface of the separator substrate, followed by drying at 60°C, to form a ceramic coating layer on one surface of the separator substrate. The second adhesive coating layer slurry was applied onto the surface of the ceramic coating layer far away from the separator substrate, followed by drying at 60°C, to form a second adhesive coating layer on the surface of the ceramic coating layer far away from the separator substrate. The second adhesive coating layer slurry was applied onto the other surface of the separator substrate, followed by drying at 60°C, to form a second adhesive coating layer on the other surface of the separator substrate, thereby obtaining a separator.

Other steps are the same as in Example 1-1.

<Preparation of lithium-ion battery>

Other steps are the same as in Example 1-1 except that the surface of the separator with the ceramic coating layer is close to the positive electrode plate.

<Preparation of positive electrode plate>, <Preparation of negative electrode plate>, and <Preparation of electrolyte solution> are the same as in Example 1-1.

**Comparative Example 7**

<Preparation of separator>

The ceramic coating layer slurry was applied onto one surface of the separator substrate, followed by drying at 60°C, to form a ceramic coating layer on one surface of the separator substrate. The first adhesive coating layer slurry was applied onto the surface of the ceramic coating layer far away from the separator substrate, followed by drying at 60°C, to form a first adhesive coating layer on the surface of the ceramic coating layer far away from the separator substrate. The first adhesive coating layer slurry was applied onto the other surface of the separator substrate, followed by drying at 60°C, to form a first adhesive coating layer on the other surface of the separator substrate, thereby obtaining a separator.

Other steps are the same as in Example 1-1.

<Preparation of positive electrode plate>, <Preparation of negative electrode plate>, <Preparation of electrolyte solution>, and <Preparation of lithium-ion battery> are the same as in Comparative Example 6.

**Comparative Example 8**

<Preparation of positive electrode plate> and <Preparation of negative electrode plate> are the same as in Comparative Example 5.

<Preparation of separator>, <Preparation of electrolyte solution>, and <Preparation of lithium-ion battery> are the same as in Comparative Example 6.

**Comparative Example 9**

<Preparation of positive electrode plate> and <Preparation of negative electrode plate> are the same as in Comparative Example 5.

<Preparation of separator>, <Preparation of electrolyte solution>, and <Preparation of lithium-ion battery> are the same as in Comparative Example 7.

The preparation parameters and performance parameters of each example and comparative example are shown in Table 1 to Table 5.

**Table 1**

| | Average particle size of first polymer binder ($\mu$m) | Average particle size of second polymer binder ($\mu$m) | $N_1$ | $N_2$ | $Cr_1$ (%) | $Cr_2$ (%) | $Cw_1$ (mg/mm$^2$) | $Cw_2$ (mg/mm$^2$) | $H_1$ ($\mu$m) | $H_2$ ($\mu$m) |
|---|---|---|---|---|---|---|---|---|---|---|
| Example 1-1 | 1.6 | 10 | 0 | 0 | 50 | 50 | 0.0006 | 0.0012 | 2 | 12 |
| Example 1-2 | 0.3 | 10 | 0 | 0 | 50 | 50 | 0.0006 | 0.0012 | 2 | 12 |
| Example 1-3 | 0.6 | 10 | 0 | 0 | 50 | 50 | 0.0006 | 0.0012 | 2 | 12 |
| Example 1-4 | 1.0 | 10 | 0 | 0 | 50 | 50 | 0.0006 | 0.0012 | 2 | 12 |
| Example 1-5 | 3.0 | 10 | 0 | 0 | 50 | 50 | 0.0006 | 0.0012 | 2 | 12 |
| Example 1-6 | 1.6 | 4 | 0 | 0 | 50 | 50 | 0.0006 | 0.0012 | 2 | 12 |
| Example 1-7 | 1.6 | 8 | 0 | 0 | 50 | 50 | 0.0006 | 0.0012 | 2 | 12 |
| Example 1-8 | 1.6 | 12 | 0 | 0 | 50 | 50 | 0.0006 | 0.0012 | 2 | 12 |
| Example 1-9 | 1.6 | 15 | 0 | 0 | 50 | 50 | 0.0006 | 0.0012 | 2 | 12 |
| Example 1-10 | 1.6 | 10 | 1 | 1 | 50 | 50 | 0.0006 | 0.0012 | 2 | 12 |
| Example 1-11 | 1.6 | 10 | 2 | 2 | 50 | 50 | 0.0006 | 0.0012 | 2 | 12 |
| Example 1-12 | 1.6 | 10 | 0 | 0 | 40 | 50 | 0.00048 | 0.0012 | 1.6 | 12 |
| Example 1-13 | 1.6 | 10 | 0 | 0 | 60 | 50 | 0.00072 | 0.0012 | 2.4 | 12 |
| Example 1-14 | 1.6 | 10 | 0 | 0 | 8.3 | 50 | 0.0001 | 0.0012 | 0.33 | 12 |
| Example 1-15 | 1.6 | 10 | 0 | 0 | 83 | 50 | 0.001 | 0.0012 | 3.3 | 12 |
| Example 1-16 | 1.6 | 10 | 0 | 0 | 2.5 | 50 | 0.00003 | 0.0012 | 0.1 | 12 |
| Example 1-17 | 1.6 | 10 | 0 | 0 | 12.5 | 50 | 0.00135 | 0.0012 | 4.5 | 12 |
| Example 1-18 | 1.6 | 10 | 0 | 0 | 50 | 40 | 0.0006 | 0.00096 | 2 | 9.6 |
| Example 1-19 | 1.6 | 10 | 0 | 0 | 50 | 60 | 0.0006 | 0.00144 | 2 | 14.4 |
| Example 1-20 | 1.6 | 10 | 0 | 0 | 50 | 16.7 | 0.0006 | 0.0004 | 2 | 4 |
| Example 1-21 | 1.6 | 10 | 0 | 0 | 50 | 83.3 | 0.0006 | 0.002 | 2 | 20 |
| Example 1-22 | 1.6 | 10 | 0 | 0 | 50 | 91.7 | 0.0006 | 0.0022 | 2 | 22 |
| Example 1-23 | 1.6 | 10 | 0 | 0 | 50 | 12.5 | 0.0006 | 0.0003 | 2 | 3 |
| Example 1-24 | 1.6 | 10 | 0 | 0 | 50 | 50 | 0.0006 | 0.0012 | 2 | 12 |
| Comparative Example 1 | 0.1 | 10 | 0 | 0 | 50 | 50 | 0.0006 | 0.0012 | 2 | 12 |

(continued)

| | Average particle size of first polymer binder ($\mu$m) | Average particle size of second polymer binder ($\mu$m) | $N_1$ | $N_2$ | $Cr_1$ (%) | $Cr_2$ (%) | $Cw_1$ (mg/mm$^2$) | $Cw_2$ (mg/mm$^2$) | $H_1$ ($\mu$m) | $H_2$ ($\mu$m) |
|---|---|---|---|---|---|---|---|---|---|---|
| Comparative Example 2 | 4 | 10 | 0 | 0 | 50 | 50 | 0.0006 | 0.0012 | 2 | 12 |
| Comparative Example 3 | 1.6 | 2 | 0 | 0 | 50 | 50 | 0.0006 | 0.0012 | 2 | 12 |
| Comparative Example 4 | 1.6 | 17 | 0 | 0 | 50 | 50 | 0.0006 | 0.0012 | 2 | 12 |
| Comparative Example 5 | 1.6 | 10 | \ | \ | 50 | 50 | 0.0006 | 0.0012 | 2 | 12 |
| Comparative Example 6 | \ | 10 | 0 | 0 | \ | 50 | \ | 0.0012 | \ | 12 |
| Comparative Example 7 | 1.6 | \ | 0 | 0 | 50 | \ | 0.0006 | \ | 2 | \ |
| Comparative Example 8 | \ | 10 | \ | \ | \ | 50 | \ | 0.0012 | \ | 12 |
| Comparative Example 9 | 1.6 | \ | \ | \ | 50 | \ | 0.0006 | \ | 2 | \ |

Note: "\" in Table 1 indicates no corresponding parameter. The difference between Example 1-1 and Example 1-24 in Table 1 is that: in the lithium-ion battery of Example 1-1, the first adhesive coating layer in the separator is close to the negative electrode plate, and the second adhesive coating layer is close to the positive electrode plate, while in the lithium-ion battery of Example 1-24, the first adhesive coating layer in the separator is close to the positive electrode plate, and the second adhesive coating layer is close to the negative electrode plate.

**Table 2**

| | $F_1$ (N/m) | $F_2$ (N/m) | Ohmic impedance (m$\Omega$) | 10C charging speed (min) | 10C charging temperature rise (°C) | Capacity retention rate after 1000 cycles at 25°C (%) | 1.5m drop pass rate (%) |
|---|---|---|---|---|---|---|---|
| Example 1-1 | 8.2 | 12.1 | 8.2 | 15.3 | 18.3 | 85.2 | 100 |
| Example 1-2 | 8.3 | 10.2 | 8.1 | 15.0 | 18.5 | 82.6 | 90 |
| Example 1-3 | 8.1 | 11.4 | 8.3 | 15.4 | 18.7 | 83.9 | 100 |
| Example 1-4 | 8.5 | 11.5 | 8.2 | 15.3 | 18.6 | 84.3 | 100 |
| Example 1-5 | 8.7 | 14.3 | 8.4 | 16.4 | 18.9 | 83.6 | 100 |
| Example 1-6 | 6.3 | 12.5 | 8.2 | 15.2 | 18.6 | 81.3 | 90 |
| Example 1-7 | 7.7 | 12.1 | 8.1 | 15.5 | 18.7 | 84.2 | 100 |
| Example 1-8 | 7.5 | 12.2 | 8.3 | 15.3 | 18.5 | 83.8 | 100 |
| Example 1-9 | 10.5 | 12.1 | 8.2 | 15.0 | 18.8 | 82.4 | 90 |
| Example 1-10 | 8.6 | 12.0 | 10.4 | 15.7 | 19.6 | 82.1 | 100 |
| Example 1-11 | 8.3 | 12.4 | 12.3 | 16.8 | 20.2 | 81.4 | 100 |
| Example 1-12 | 8.4 | 9.6 | 8.5 | 15.0 | 18.7 | 83.3 | 90 |

(continued)

| | $F_1$ (N/m) | $F_2$ (N/m) | Ohmic impedance (mΩ) | 10C charging speed (min) | 10C charging temperature rise (°C) | Capacity retention rate after 1000 cycles at 25°C (%) | 1.5m drop pass rate (%) |
|---|---|---|---|---|---|---|---|
| Example 1-13 | 8.3 | 14.4 | 7.9 | 15.3 | 18.1 | 82.5 | 100 |
| Example 1-14 | 8.1 | 9.4 | 8.6 | 15.3 | 18.4 | 83.0 | 80 |
| Example 1-15 | 8.3 | 14.6 | 8.1 | 15.6 | 18.7 | 80.7 | 100 |
| Example 1-16 | 8.2 | 7.8 | 8.2 | 15.4 | 18.7 | 77.3 | 70 |
| Example 1-17 | 8.5 | 10.4 | 7.8 | 15.1 | 18.8 | 75.3 | 80 |
| Example 1-18 | 6.4 | 12.2 | 8.0 | 15.2 | 18.7 | 82.1 | 90 |
| Example 1-19 | 9.6 | 12.1 | 8.2 | 15.5 | 18.3 | 81.2 | 100 |
| Example 1-20 | 6.1 | 12 | 8.2 | 15.3 | 18.1 | 80.6 | 80 |
| Example 1-21 | 9.8 | 12 | 8.4 | 16.4 | 19.2 | 79.1 | 100 |
| Example 1-22 | 10.2 | 12 | 8.2 | 17.3 | 19.5 | 77.4 | 100 |
| Example 1-23 | 5.7 | 12.4 | 8.1 | 15.0 | 18.7 | 77.7 | 70 |
| Example 1-24 | 8.1 | 1.3 | 8.1 | 16.2 | 18.7 | 83.1 | 70 |
| Comparative Example 1 | 8.3 | 3.2 | 8.3 | 15.3 | 18.1 | 63.4 | 50 |
| Comparative Example 2 | 8.6 | 14.5 | 8.2 | 15.5 | 18.3 | 55.4 | 100 |
| Comparative Example 3 | 1.5 | 12.5 | 8.3 | 15.1 | 18.4 | 63.2 | 40 |
| Comparative Example 4 | 11.3 | 12.3 | 8.6 | 15.6 | 18.7 | 54.3 | 80 |
| Comparative Example 5 | 8.2 | 12.2 | 16.4 | 22.8 | 25.5 | 42.3 | 100 |
| Comparative Example 6 | 8.4 | 1,6 | 8.2 | 15.3 | 18.7 | 85.2 | 40 |
| Comparative Example 7 | 12.2 | 12.5 | 8.2 | 15.4 | 18.8 | 40.1 | 100 |
| Comparative Example 8 | 8.5 | 1.4 | 17.2 | 22.4 | 26.5 | 40.2 | 100 |
| Comparative Example 9 | 12.4 | 12.3 | 16.8 | 23.0 | 26.3 | 39.7 | 100 |

From Examples 1-1 to 1-24 and Comparative Examples 1 to 9, it can be seen that in the secondary battery according to the embodiments of this application, by arranging the positive electrode current collector to integrally extend to form a plurality of positive electrode tabs and the negative electrode current collector to integrally extend to form a plurality of negative electrode tabs, the fast-charging secondary battery has a multi-tab structure. Additionally, the first adhesive coating layer and the second adhesive coating layer are respectively disposed on two sides of the separator, and the average particle size of the first polymer binder in the first adhesive coating layer and the average particle size of the second polymer binder in the second adhesive coating layer are within the range of this application, so that the adhesion $F_1$ of the separator to the positive electrode plate and the adhesion $F_2$ of the separator to the negative electrode plate are high. The secondary battery has low ohmic impedance, short charging time (that is, high charging speed), and low charging temperature rise at a charging rate of 10C, indicating that the secondary battery has good kinetic performance under fast charging conditions. The secondary battery has a high capacity retention rate at a charging rate of 10C, indicating that the secondary battery has good cycling performance under fast charging conditions. The secondary battery has a high 1.5m drop pass rate, indicating that the secondary battery has good mechanical reliability. Thus, the secondary battery in the embodiments of this application can balance the kinetic performance, cycling performance, and mechanical reliability under fast charging conditions. In contrast, for the secondary batteries of Comparative Examples 1 and 2, the average particle size of the first polymer binder in their separators is not within the range of this application; for the secondary batteries of Comparative Examples 3 and 4, the average particle size of the second polymer binder in their separators is not within the range of this application; for the secondary battery of Comparative Example 5, it has an embedded single-tab structure instead of the multi-tab structure of this application; for the secondary battery of Comparative Example 6, both sides of its separator are configured as the second adhesive coating layer, instead of the separator structure of this application; for the secondary battery of Comparative Example 7, both sides of its separator are configured as the first adhesive coating layer, instead of the separator structure of this application; for the secondary battery of Comparative Example 8, both sides of its separator are configured as the second adhesive coating layer, instead of the separator structure of this application, and it has an embedded single-tab structure instead of the multi-tab structure of this application; for the secondary battery of Comparative Example 9, both sides of its separator are configured as the first adhesive coating layer, instead of the separator structure of this application, and it has an embedded single-tab structure instead of the multi-tab structure of this application. In the secondary batteries of Comparative Examples 1 to 9, the adhesion $F_1$ of the separator to the positive electrode plate and/or the adhesion $F_2$ of the separator to the negative electrode plate are low. The secondary batteries have high ohmic impedance, long charging time (that is, low charging speed), and high charging temperature rise at a charging rate of 10C, indicating that the secondary batteries have poor kinetic performance under fast charging conditions, or the secondary batteries have a low capacity retention rate at a charging rate of 10C, indicating that the secondary batteries have low cycling performance under fast charging conditions, or the secondary batteries have a low pass rate for 1.5m drop test, indicating that the secondary batteries have low mechanical reliability. Thus, the secondary batteries of the comparative examples of this application fail to balance the kinetic performance, cycling performance, and mechanical reliability under fast charging conditions.

The average particle size of the first polymer binder typically affects the kinetic performance, cycling performance, and mechanical reliability of the secondary battery. From Examples 1-1 to 1-5, Comparative Example 1, and Comparative Example 2, it can be seen that the secondary batteries using a first polymer binder with an average particle size within the range of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions. Compared to Example 1-2 and Example 1-5, the average particle size of the first polymer binder in Example 1-1, Example 1-3, and Example 1-4 is within the preferred range of 0.6 $\mu$m to 1.6 $\mu$m, allowing the secondary batteries to have lower ohmic impedance, shorter charging time, lower charging temperature rise, and higher drop pass rate, while maintaining a higher capacity retention rate. This indicates that secondary batteries with the average particle size of the first polymer binder within the preferred range of 0.6 $\mu$m to 1.6 $\mu$m have higher cycling performance while maintaining good kinetic performance and mechanical reliability under fast charging conditions.

The average particle size of the second polymer binder typically affects the kinetic performance, cycling performance, and mechanical reliability of the secondary battery. From Examples 1-1, 1-6 to 1-9, Comparative Example 3, and Comparative Example 4, it can be seen that the secondary batteries using a second polymer binder with an average particle size within the range of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions. Compared to Example 1-6 and Example 1-9, the average particle size of the second polymer binder in Example 1-1, Example 1-7, and Example 1-8 is within the preferred range of 8 $\mu$m to 12 $\mu$m, allowing the secondary batteries to have lower ohmic impedance, shorter charging time, and lower charging temperature rise, while also having higher capacity retention rate and drop pass rate. This indicates that the secondary batteries with the average particle size of the second polymer binder within the preferred range of 8 $\mu$m to 12 $\mu$m have higher cycling performance and mechanical reliability while having good kinetic performance under fast charging conditions.

The values of $N_1$ and $N_2$ typically affect the kinetic performance, cycling performance, and mechanical reliability of the secondary battery. From Example 1-1, Example 1-10, and Example 1-11, it can be seen that as $N_1$ and $N_2$ increase, the ohmic impedance, charging time, and charging temperature rise of the secondary battery all increase. However, the number of electrode tabs decreases as $N_1$ and $N_2$ increase, so the energy density of Example 1-10 and Example 1-11 is greater than that of Example 1-1.

The coverage rate $Cr_1$ of the first polymer binder in the first adhesive coating layer per unit area, the single-sided coating weight $Cw_1$ of the first adhesive coating layer, and the thickness $H_1$ of the first adhesive coating layer typically affect the kinetic performance, cycling performance, and mechanical reliability of the secondary battery. From Example 1-1, Examples 1-12 to 1-17, it can be seen that the secondary batteries using a first polymer binder with a coverage rate $Cr_1$ of the first polymer binder in the first adhesive coating layer per unit area, a single-sided coating weight $Cw_1$ of the first adhesive coating layer, and a thickness $H_1$ of the first adhesive coating layer within the ranges of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions.

The coverage rate $Cr_2$ of the second polymer binder in the second adhesive coating layer per unit area, the single-sided coating weight $Cw_2$ of the second adhesive coating layer, and the thickness $H_2$ of the second adhesive coating layer typically affect the kinetic performance, cycling performance, and mechanical reliability of the secondary battery. From Example 1-1, and Examples 1-18 to 1-23, it can be seen that the secondary batteries using a second polymer binder with a coverage rate $Cr_2$ of the second polymer binder in the second adhesive coating layer per unit area, a single-sided coating weight $Cw_2$ of the second adhesive coating layer, and a thickness $H_2$ of the second adhesive coating layer within the ranges of this application have low ohmic impedance, short charging time (that is, high charging speed), and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions.

The positional relationship between the first adhesive coating layer and the second adhesive coating layer in the separator and the positive electrode plate and the negative electrode plate typically affects the kinetic performance, cycling performance, and mechanical reliability of the secondary battery. From Example 1-1 and Example 1-24, it can be seen that the adhesion between the second polymer binder polyvinylidene fluoride and the negative electrode plate is poor, resulting in a lower adhesion $F_2$ of the separator to the negative electrode plate, causing the battery of Example 1-24 to have a worse drop resistance performance compared to the battery of Example 1-1. Additionally, in Example 1-24, since the second adhesive coating layer corresponds to the negative electrode plate side, the lithium ion transmission path is longer during fast charging, resulting in a slightly longer charging time for Example 1-24 compared to Example 1-1.

**Table 3**

| | First polymer binder | Second polymer binder | $F_1$ (N/m) | $F_2$ (N/m) | Ohmic impedance (mΩ) | 10C charging speed (min) | 10C charging temperature rise (°C) | Capacity retention rate (%) | Drop pass rate (%) |
|---|---|---|---|---|---|---|---|---|---|
| Example 1-1 | Polyacrylic acid | Polyvinylidene fluoride | 8.1 | 12.1 | 8.2 | 15.3 | 18.3 | 85.2 | 100 |
| Example 2-1 | Polyacrylonitrile | Polyvinylidene fluoride | 8.3 | 12.8 | 8.3 | 15.4 | 18.9 | 84.2 | 100 |
| Example 2-2 | Core: polyethyl acrylate (Mw=9.5×10$^4$); shell: polymethyl acrylate (Mw=4×10$^4$-6×10$^4$); core-shell mass ratio: 1:1 | Polyvinylidene fluoride | 8.2 | 13.2 | 8.6 | 15.3 | 18.9 | 85.1 | 100 |
| Example 2-3 | Polyacrylic acid | Polyvinylidene chloride | 8.6 | 12.3 | 8.1 | 15.5 | 18.8 | 83.8 | 100 |
| Example 2-4 | Polyacrylic acid | Core: polyhexafluoropropylene (Mw=2×10$^5$-3×10$^5$); shell: polyvinyl chloride (Mw=4×10$^4$-6×10$^4$); core-shell mass ratio: 1:1 | 8.9 | 12.1 | 8.3 | 15.5 | 19.0 | 83.9 | 100 |

The type of the first polymer binder typically affects the kinetic performance, cycling performance, and mechanical reliability of the secondary battery. From Example 1-1, Example 2-1, and Example 2-2, it can be seen that the secondary batteries using a first polymer binder of the type within the range of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions.

The type of the second polymer binder typically affects the kinetic performance, cycling performance, and mechanical reliability of the secondary battery. From Example 1-1, Example 2-3, and Example 2-4, it can be seen that the secondary batteries using a second polymer binder of the type within the range of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. Thus, the secondary batteries can balance the kinetic performance, cycling performance, and mechanical reliability under fast charging conditions.

**Table 4**

| | Ceramic particles | Average particle size of ceramic particles ($\mu$m) | $H_3$ ($\mu$m) | Number of ceramic coating layer layers in separator | Position of ceramic coating layer in separator |
|---|---|---|---|---|---|
| Example 1-1 | Aluminum oxide | 2 | 1 | 1 | between separator substrate and second adhesive coating layer |
| Example 3-1 | Aluminum oxide | 2 | 1 | 1 | between separator substrate and first adhesive coating layer |
| Example 3-2 | Aluminum oxide | 2 | 1 | 2 | between separator substrate and second adhesive coating layer, and between separator substrate and first adhesive coating layer |
| Example 3-3 | \ | \ | \ | \ | \ |
| Example 3-4 | Boehmite | 2 | 1 | 1 | between separator substrate and second adhesive coating layer |
| Example 3-5 | Aluminum oxide | 1 | 1 | 1 | between separator substrate and second adhesive coating layer |
| Example 3-6 | Aluminum oxide | 3 | 1 | 1 | between separator substrate and second adhesive coating layer |
| Example 3-7 | Aluminum oxide | 0.5 | 1 | 1 | between separator substrate and second adhesive coating layer |
| Example 3-8 | Aluminum oxide | 4 | 1 | 1 | between separator substrate and second adhesive coating layer |
| Example 3-9 | Aluminum oxide | 2 | 3 | 1 | between separator substrate and second adhesive coating layer |
| Example 3-10 | Aluminum oxide | 2 | 6 | 1 | between separator substrate and second adhesive coating layer |
| Example 3-11 | Aluminum oxide | 2 | 0.2 | 1 | between separator substrate and second adhesive coating layer |
| Example | Aluminum | 2 | 7 | 1 | between separator substrate and second adhesive |

(continued)

| | Ceramic particles | Average particle size of ceramic particles (μm) | H$_3$ (μm) | Number of ceramic coating layer layers in separator | Position of ceramic coating layer in separator |
|---|---|---|---|---|---|
| 3-12 | oxide | | | | coating layer |
| Note: "\" in Table 4 indicates no corresponding parameter. | | | | | |

**Table 5**

| | F$_1$ (N/m) | F$_2$ (N/m) | Ohmic impedance (mΩ) | 10C charging speed (min) | 10C charging temperature rise (°C) | Capacity retention rate (%) | Drop pass rate (%) | Thermal box pass rate (%) |
|---|---|---|---|---|---|---|---|---|
| Example 1-1 | 8.2 | 12.1 | 8.2 | 15.3 | 18.3 | 85.2 | 100 | 100 |
| Example 3-1 | 8.1 | 12.1 | 8.3 | 15.6 | 18.5 | 84.4 | 100 | 100 |
| Example 3-2 | 8.3 | 12.0 | 8.5 | 15.1 | 18.2 | 84.6 | 100 | 100 |
| Example 3-3 | 8.0 | 12.2 | 8.2 | 15.3 | 18.7 | 82.3 | 100 | 80 |
| Example 3-4 | 8.4 | 12.3 | 8.3 | 15.4 | 18.8 | 83.2 | 100 | 100 |
| Example 3-5 | 8.5 | 12.2 | 8.6 | 15.5 | 18.9 | 82.1 | 100 | 100 |
| Example 3-6 | 8.5 | 12.6 | 8.8 | 15.6 | 19.0 | 86.4 | 100 | 100 |
| Example 3-7 | 8.3 | 12.1 | 9.4 | 15.8 | 19.2 | 77.5 | 100 | 90 |
| Example 3-8 | 8.2 | 12.0 | 9.3 | 15.8 | 19.1 | 74.3 | 80 | 100 |
| Example 3-9 | 8.1 | 12.1 | 8.4 | 15.4 | 19.0 | 89.1 | 100 | 100 |
| Example 3-10 | 8.7 | 12.5 | 8.8 | 15.6 | 19.1 | 90.4 | 100 | 100 |
| Example 3-11 | 8.6 | 12.2 | 9.4 | 15.8 | 19.2 | 77.5 | 100 | 80 |
| Example 3-12 | 8.1 | 12.3 | 9.8 | 16.0 | 19.4 | 80.3 | 90 | 100 |

The setting of the ceramic coating layer in the separator typically affects the kinetic performance, cycling performance, mechanical reliability, and thermal safety performance of the fast-charging secondary battery. From Example 1-1, and Examples 3-1 to 3-3, it can be seen that arranging a ceramic coating layer in the separator can further improve the thermal safety performance of the fast-charging secondary battery while enabling the fast-charging secondary battery to have good kinetic performance, cycling performance, and mechanical reliability. The fast-charging secondary batteries with the number and positional relationship of ceramic coating layers in the separator within the ranges of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. The secondary batteries have a high thermal box pass rate, indicating that the secondary batteries have good thermal safety performance. Thus, the secondary batteries can balance the kinetic performance, cycling performance, and mechanical reliability under fast charging conditions, and also have good thermal safety performance.

The type and average particle size of the ceramic particles typically affect the kinetic performance, cycling performance, mechanical reliability, and thermal safety performance of the fast-charging secondary battery. From Example 1-1, Example 3-4, Examples 3-5 to 3-8, it can be seen that fast-charging secondary batteries using ceramic particles of the type and average particle size within the ranges of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. The secondary batteries have a high thermal box pass rate, indicating that the secondary batteries have good thermal safety performance. Thus, the secondary batteries can balance the kinetic performance, cycling performance, and mechanical reliability under fast charging conditions, and also have good thermal safety performance.

The thickness $H_3$ of the ceramic coating layer typically affects the kinetic performance, cycling performance, mechanical reliability, and thermal safety performance of the fast-charging secondary battery. From Example 1-1, and Examples 3-9 to 3-12, it can be seen that fast-charging secondary batteries using a ceramic coating layer with a thickness $H_3$ within the range of this application have low ohmic impedance, short charging time, and low charging temperature rise at a charging rate of 10C, indicating that the secondary batteries have good kinetic performance under fast charging conditions. The secondary batteries have a high capacity retention rate at a charging rate of 10C, indicating that the secondary batteries have good cycling performance under fast charging conditions. The secondary batteries have a high 1.5m drop pass rate, indicating that the secondary batteries have good mechanical reliability. The secondary batteries have a high thermal box pass rate, indicating that the secondary batteries have good thermal safety performance. Thus, the secondary batteries have good thermal safety performance while balancing the kinetic performance, cycling performance, and mechanical reliability under fast charging conditions.

It should be noted that in this specification, relational terms such as first and second are used solely to distinguish one entity or operation from another entity or operation, but do not necessarily require or imply any actual relationship or order between such entities or operations. Moreover, the terms "include," "comprise," or any other variants are intended to cover a non-exclusive inclusion, such that a process, method, article, or device that includes a list of elements not only includes those elements but also includes other elements that are not expressly listed, or further includes elements inherent to such process, method, article, or device.

The embodiments in this specification are described in an interrelated manner. For a part that is the same or similar between different embodiments, reference may be made between the embodiments. Each embodiment focuses on differences from other embodiments.

The foregoing descriptions are merely preferred embodiments of this application, but are not intended to limit this application. Any modification, equivalent replacement, or improvement made without departing from the spirit and principle of this application shall fall within the protection scope of this application.

**Claims**

1. A fast-charging secondary battery, comprising an electrode assembly and an electrolyte solution, wherein the electrode assembly comprises a positive electrode plate, a negative electrode plate, and a separator disposed between the positive electrode plate and the negative electrode plate; the positive electrode plate comprises a positive electrode current collector, the positive electrode current collector integrally extending to form a plurality of positive electrode tabs; and the negative electrode plate comprises a negative electrode current collector, the negative electrode current collector integrally extending to form a plurality of negative electrode tabs; and
the separator comprises a substrate, a first adhesive coating layer, and a second adhesive coating layer, wherein the first adhesive coating layer and the second adhesive coating layer are respectively disposed on two sides of the separator substrate; the first adhesive coating layer contains a first polymer binder, an average particle size of the first polymer binder being in a range of 0.3 $\mu$m to 3 $\mu$m; and the second adhesive coating layer contains a second polymer binder, an average particle size of the second polymer binder being in a range of 4 $\mu$m to 15 $\mu$m.

2. The fast-charging secondary battery according to claim 1, wherein $N_1$ layers of the positive electrode plate are disposed between two adjacent positive electrode tabs, and $N_2$ layers of the negative electrode plate are disposed between two adjacent negative electrode tabs, wherein $N_1$ and $N_2$ are each independently selected from 0, 1, 2, or 3.

3. The fast-charging secondary battery according to claim 1, wherein the first adhesive coating layer is disposed on a side of the separator substrate closer to the negative electrode plate, and the second adhesive coating layer is disposed on a side of the separator substrate closer to the positive electrode plate.

4. The fast-charging secondary battery according to claim 1, wherein the average particle size of the first polymer binder is in a range of 0.6 $\mu$m to 1.6 $\mu$m; and/or
the average particle size of the second polymer binder is in a range of 8 $\mu$m to 12 $\mu$m.

5. The fast-charging secondary battery according to claim 1, wherein a thickness of the first adhesive coating layer is in a range of 0.2 $\mu$m to 4 $\mu$m; and/or
a thickness of the second adhesive coating layer is in a range of 5 $\mu$m to 20 $\mu$m.

6. The fast-charging secondary battery according to claim 1, wherein a single-sided coating weight of the first adhesive coating layer is in a range of 0.0001 mg/mm$^2$ to 0.001 mg/mm$^2$, and a single-sided coating weight of the second adhesive coating layer is in a range of 0.0004 mg/mm$^2$ to 0.002 mg/mm$^2$.

7. The fast-charging secondary battery according to claim 1, wherein a coverage rate of the first polymer binder in the first adhesive coating layer per unit area is in a range of 40% to 60%.

8. The fast-charging secondary battery according to claim 1, wherein

the first polymer binder has a core-shell structure, and the first polymer binder comprises a first shell and a first core; wherein a polymerization monomer of the first shell comprises one or more selected from the group consisting of methyl acrylate, ethyl acrylate, butyl acrylate, methyl methacrylate, ethyl methacrylate, butyl methacrylate, ethylene, chloroethyl methacrylate, chlorostyrene, fluorostyrene, methylstyrene, acrylonitrile, and methacrylonitrile; and a polymerization monomer of the first core comprises one or more selected from the group consisting of ethyl acrylate, butyl acrylate, ethyl methacrylate, styrene, chlorostyrene, fluorostyrene, methylstyrene, acrylic acid, methacrylic acid, and maleic acid; or
the first polymer binder has a non-core-shell structure, and a polymerization monomer of the first polymer binder comprises one or more selected from the group consisting of acrylic acid, methyl acrylate, butyl acrylate, butadiene, styrene, acrylonitrile, ethylene, fluorostyrene, chlorostyrene, and propylene.

9. The fast-charging secondary battery according to claim 1, wherein a coverage rate of the second polymer binder in the second adhesive coating layer per unit area is in a range of 40% to 60%.

10. The fast-charging secondary battery according to claim 1, wherein

the second polymer binder has a core-shell structure, and the second polymer binder comprises a second shell and a second core; wherein a polymerization monomer of the second shell comprises one or more selected from the group consisting of vinylidene chloride, vinylidene fluoride, hexafluoropropylene, styrene, butadiene, acrylonitrile, acrylic acid, methyl acrylate, and butyl acrylate; and a polymerization monomer of the second core comprises one or more selected from the group consisting of ethyl methacrylate, methyl acrylate, ethyl acrylate, butyl acrylate, methyl methacrylate, butyl methacrylate, and chloroethyl methacrylate; or
the second polymer binder has a non-core-shell structure, and a polymerization monomer of the second polymer binder comprises one or more selected from the group consisting of vinylidene chloride, vinylidene fluoride, hexafluoropropylene, ethylene, propylene, vinyl chloride, chloropropylene, acrylic acid, methyl acrylate, butyl acrylate, styrene, butadiene, and acrylonitrile.

11. The fast-charging secondary battery according to claim 1, wherein the separator further comprises a ceramic coating layer, wherein the ceramic coating layer is disposed between the separator substrate and the first adhesive coating layer, and/or the ceramic coating layer is disposed between the separator substrate and the second adhesive coating layer; and
the ceramic coating layer comprises ceramic particles, an average particle size of the ceramic particles being in a range of 1 μm to 3 μm.

12. The fast-charging secondary battery according to claim 11, wherein the ceramic particles comprise one or more selected from the group consisting of aluminum oxide, boehmite, titanium dioxide, silicon dioxide, zirconium dioxide, tin dioxide, magnesium hydroxide, magnesium oxide, zinc oxide, barium sulfate, boron nitride, aluminum nitride, and silicon nitride.

13. The fast-charging secondary battery according to claim 11, wherein a thickness of the ceramic coating layer is in a range of 0.5 μm to 6 μm.

14. An electrical apparatus, comprising the fast-charging secondary battery according to any one of claims 1 to 13.

**001**

FIG. 1

**001**

FIG. 2

**11**

FIG. 3

**21**

FIG. 4

FIG. 5

10

32

30

31

33

H₁

H₂

Z

Y

FIG. 6

32

34

31

33

30

H₁

H₃

H₂

Z

Y

FIG. 7

32

31

34

33

30

H₁

H₃

H₂

Z

Y

FIG. 8

FIG. 9

## INTERNATIONAL SEARCH REPORT

International application No.

**PCT/CN2023/122770**

### A. CLASSIFICATION OF SUBJECT MATTER

H01M50/457(2021.01)i; H01M50/434(2021.01)i; H01M10/0525(2010.01)i; H01M10/0587(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, CNKI, ISI: 电池, 正极, 负极, 阴极, 阳极, 电极, 粘结, 隔离膜, 隔膜, 隔板, 涂层, 聚合物, 粒径, 直径, 尺寸, battery, positive, anode, negative, cathode, electrode, binder, binding, adhesive, isolate+, film, membrane, separator, plate, coating?, layer, polymer, size, diameter

### C. DOCUMENTS CONSIDERED TO BE RELEVANT

| Category* | Citation of document, with indication, where appropriate, of the relevant passages | Relevant to claim No. |
|---|---|---|
| X | CN 113826253 A (NINGDE AMPEREX TECHNOLOGY LTD.) 21 December 2021 (2021-12-21) description, paragraphs [0005]-[0073] | 1-14 |
| A | CN 114175384 A (NINGDE AMPEREX TECHNOLOGY LTD.) 11 March 2022 (2022-03-11) claims 1-19 | 1-14 |
| A | CN 114175387 A (NINGDE AMPEREX TECHNOLOGY LTD.) 11 March 2022 (2022-03-11) claims 1-14 | 1-14 |
| A | CN 116315138 A (DONGGUAN AMPEREX TECHNOLOGY LTD.) 23 June 2023 (2023-06-23) claims 1-10 | 1-14 |
| A | CN 111952518 A (NINGDE AMPEREX TECHNOLOGY LTD.) 17 November 2020 (2020-11-17) claims 1-16 | 1-14 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 December 2023** | **07 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/122770** |

### C. DOCUMENTS CONSIDERED TO BE RELEVANT

| Category* | Citation of document, with indication, where appropriate, of the relevant passages | Relevant to claim No. |
|---|---|---|
| A | KR 20150015918 A (LG CHEM LTD.) 11 February 2015 (2015-02-11) <br> claims 1-14 | 1-14 |
| A | KR 20190029320 A (LG CHEM LTD.) 20 March 2019 (2019-03-20) <br> claims 1-10 | 1-14 |

Form PCT/ISA/210 (second sheet) (July 2022)

**INTERNATIONAL SEARCH REPORT**
Information on patent family members

International application No.

**PCT/CN2023/122770**

| Patent document cited in search report | | | Publication date (day/month/year) | Patent family member(s) | | | Publication date (day/month/year) |
|---|---|---|---|---|---|---|---|
| CN | 113826253 | A | 21 December 2021 | WO | 2022016378 | A1 | 27 January 2022 |
| | | | | EP | 4184700 | A1 | 24 May 2023 |
| | | | | US | 2023163414 | A1 | 25 May 2023 |
| CN | 114175384 | A | 11 March 2022 | WO | 2022205163 | A1 | 06 October 2022 |
| CN | 114175387 | A | 11 March 2022 | WO | 2022205156 | A1 | 06 October 2022 |
| CN | 116315138 | A | 23 June 2023 | | None | | |
| CN | 111952518 | A | 17 November 2020 | US | 11658366 | B2 | 23 May 2023 |
| | | | | US | 2021057700 | A1 | 25 February 2021 |
| KR | 20150015918 | A | 11 February 2015 | | None | | |
| KR | 20190029320 | A | 20 March 2019 | KR | 102417589 | B1 | 05 July 2022 |

Form PCT/ISA/210 (patent family annex) (July 2022)

## REFERENCES CITED IN THE DESCRIPTION

**Non-patent literature cited in the description**

- *GB/T 6328-2008*